# EUROPEAN PATENT APPLICATION

(11) **EP 4 832 631 A1**
(43) Date of publication of application: **28.10.2026**
(21) Application number: 24933442.6
(22) Date of filing: 03.04.2024
(51) Int. Cl.: H04W 72/21

(54) **CONFIGURATION METHOD AND APPARATUS, DEVICE, MEDIUM, AND PROGRAM PRODUCT**

(71) Applicant: GUANGDONG OPPO MOBILE TELECOMMUNICATIONS CORP., LTD., Dongguan, Guangdong 523860 (CN)
(72) Inventor: WU, Danyang, Dongguan, Guangdong 523860 (CN); LIN, Yanan, Dongguan, Guangdong 523860 (CN)
(74) Representative: Novagraaf Technologies
(86) International application number: PCT/CN2024/086065
(87) International publication number: WO 2025/208489

(57) **Abstract**

The present application relates to the field of communications, and discloses a configuration method and apparatus, a device, a medium, and a program product. The method comprises: receiving first information, the first information being used for triggering at least one measurement resource configuration and/or at least one reporting configuration; the measurement resource configuration comprises at least one of the following: measurement resource configuration of interference information, measurement resource configuration of CSI, and measurement resource configuration of joint information; the reporting configuration comprises at least one of the following: reporting configuration of the interference information, reporting configuration of the CSI, and reporting configuration of the joint information; and the joint information is joint information of the interference information and the CSI. The channel state and/or interference information can be obtained timely, thereby assisting a network device in timely knowing communication conditions within the system and timely adjusting scheduling strategies.

## Description

### TECHNICAL FIELD

This application relates to the field of communications, and in particular, to a configuration method and apparatus, a device, a medium, and a program product.

### BACKGROUND

Cross-link interference may exist between terminal devices. Especially, for neighboring UEs with different transmission directions, a terminal device that receives a downlink channel is interfered by uplink transmission of a neighboring terminal device.

In order to deal with this cross-link interference problem, downlink quality and/or interference signal strength should be evaluated. However, it is difficult for a conventional measurement and reporting mechanism to identify channel quality and interference strength in a timely and effective manner, and is not applicable to cross-link interference measurement between neighboring UEs in different transmission directions.

### SUMMARY

An embodiment of this application provides a configuration method and apparatus, a device, a medium, and a program product. The technical solutions are as follows.

According to an aspect of this application, a configuration method is provided, where the method is performed by a terminal device, and the method includes:
receiving first information, where the first information is used to trigger at least one measurement resource configuration and/or at least one reporting configuration, where the measurement resource configuration includes at least one of the following: a measurement resource configuration of interference information, a measurement resource configuration of channel state information CSI, or a measurement resource configuration of joint information; the reporting configuration includes at least one of the following: a reporting configuration of the interference information, a reporting configuration of the CSI, or a reporting configuration of the joint information; and the joint information is joint information of the interference information and the CSI.

According to another aspect of this application, a configuration method is provided, where the method is performed by a network device, and the method includes:
transmitting first information, where the first information is used to trigger at least one measurement resource configuration and/or at least one reporting configuration, where the measurement resource configuration includes at least one of the following: a measurement resource configuration of interference information, a measurement resource configuration of channel state information CSI, or a measurement resource configuration of joint information; the reporting configuration includes at least one of the following: a reporting configuration of the interference information, a reporting configuration of the CSI, or a reporting configuration of the joint information; and the joint information is joint information of the interference information and the CSI.

According to an aspect of this application, a configuration apparatus is provided, where the apparatus includes:
a receiving module, configured to receive first information, where the first information is used to trigger at least one measurement resource configuration and/or at least one reporting configuration, where the measurement resource configuration includes at least one of the following: a measurement resource configuration of interference information, a measurement resource configuration of channel state information CSI, or a measurement resource configuration of joint information; the reporting configuration includes at least one of the following: a reporting configuration of the interference information, a reporting configuration of the CSI, or a reporting configuration of the joint information; and the joint information is joint information of the interference information and the CSI.

According to another aspect of this application, a configuration apparatus is provided, where the apparatus includes:
a transmitting module, configured to transmit first information, where the first information is used to trigger at least one measurement resource configuration and/or at least one reporting configuration, where the measurement resource configuration includes at least one of the following: a measurement resource configuration of interference information, a measurement resource configuration of channel state information CSI, or a measurement resource configuration of joint information; the reporting configuration includes at least one of the following: a reporting configuration of the interference information, a reporting configuration of the CSI, or a reporting configuration of the joint information; and the joint information is joint information of the interference information and the CSI.

According to an aspect of this application, a terminal device is provided. The terminal device includes: a processor; a transceiver connected to the processor; and a memory configured to store executable instructions of the processor, where the processor is configured to load and execute the executable instructions to implement the configuration method according to the foregoing aspect.

According to an aspect of this application, a network device is provided. The network device includes: a processor; a transceiver connected to the processor; and a memory configured to store executable instructions of the processor, where the processor is configured to load and execute the executable instructions to implement the configuration method according to the foregoing aspect.

According to an aspect of this application, a computer-readable storage medium is provided, where the computer-readable storage medium stores executable instructions, and the executable instructions are loaded and executed by a processor to implement the configuration method according to the foregoing aspect.

According to an aspect of this application, a computer program product is provided, where the computer program product includes computer instructions, the computer instructions are stored in a computer-readable storage medium, a processor of a computer device reads the computer instructions from the computer-readable storage medium, and the processor executes the computer instructions to cause the computer device to perform the configuration method according to the foregoing aspect.

According to an aspect of this application, a chip is provided, where the chip includes a programmable logic circuit and/or program instructions, and when the chip runs, the chip is configured to implement the configuration method according to the foregoing aspect.

According to an aspect of this application, a computer program is provided, where the computer program includes computer instructions, and a processor of a computer device executes the computer instructions to cause the computer device to perform the configuration method according to the foregoing aspect.

The technical solutions provided in embodiments of this application include at least the following beneficial effects:
Triggering a measurement configuration and/or a reporting configuration for UE by using first information is supported, so that the UE obtains a channel state and/or interference information in a timely manner, to report the channel state and/or the interference information in a timely manner, thereby assisting a network device in learning an intra-system communication status and adjusting a scheduling policy in a timely manner. This ensures communication efficiency and reliability in a communication system.

### BRIEF DESCRIPTION OF DRAWINGS

To describe technical solutions in embodiments of this application more clearly, the following briefly describes the accompanying drawings required for the embodiments. It is clear that the accompanying drawings in the following description show merely some embodiments of this application, and a person of ordinary skill in the art may still derive other drawings from these accompanying drawings without creative efforts.
FIG. 1 is a schematic diagram of a frequency domain location of an uplink subband according to some exemplary embodiments of this application;
FIG. 2 is a schematic diagram of a format of a field according to some exemplary embodiments of this application;
FIG. 3 is a schematic diagram of a communication system according to some exemplary embodiments of this application;
FIG. 4 is a schematic flowchart of a configuration method according to some exemplary embodiments of this application;
FIG. 5 is a schematic flowchart of a configuration method according to some exemplary embodiments of this application;
FIG. 6 is a schematic flowchart of a configuration method according to some exemplary embodiments of this application;
FIG. 7 is a schematic flowchart of a configuration method according to some exemplary embodiments of this application;
FIG. 8 is a schematic flowchart of a configuration method according to some exemplary embodiments of this application;
FIG. 9 is a schematic flowchart of a configuration method according to some exemplary embodiments of this application;
FIG. 10 is a schematic flowchart of a configuration method according to some exemplary embodiments of this application;
FIG. 11 is a schematic flowchart of a configuration method according to some exemplary embodiments of this application;
FIG. 12 is a schematic flowchart of a configuration method according to some exemplary embodiments of this application;
FIG. 13 is a schematic flowchart of a configuration method according to some exemplary embodiments of this application;
FIG. 14 is a schematic diagram of an interference scenario according to some exemplary embodiments of this application;
FIG. 15 is a structural block diagram of a configuration apparatus according to some exemplary embodiments of this application;
FIG. 16 is a structural block diagram of a configuration apparatus according to some exemplary embodiments of this application; and
FIG. 17 is a schematic structural diagram of a communication device according to some exemplary embodiments of this application.

### DESCRIPTION OF EMBODIMENTS

To make the objectives, technical solutions, and advantages of this application clearer, the following further describes implementations of this application in detail with reference to the accompanying drawings. Example embodiments are described in detail herein, and examples of the example embodiments are presented in the accompanying drawings. When the following description relates to the accompanying drawings, unless specified otherwise, same numbers in different accompanying drawings represent a same or similar element. Implementations described in the following example embodiments do not represent all implementations consistent with this application. On the contrary, the implementations are merely examples of apparatuses and methods that are described in the appended claims in detail and that are consistent with some aspects of this application.

Terms used in this application are merely for the purpose of describing specific embodiments, but are not intended to limit this application. The terms "a", "said" and "the" of singular forms used in embodiments and the appended claims of this application are also intended to include plural forms, unless otherwise specified in the context clearly. It should also be understood that, the term "and/or" used herein indicates and includes any or all possible combinations of one or more associated listed items.

It should be understood that, although the terms such as "first" and "second", and "third" may be used in this application to describe various information, the information should not be limited to these terms. These terms are merely used to distinguish between different information of a same type. For example, first information may also be referred to as second information without departing from the scope of this application. Similarly, the second information may also be referred to as the first information. Depending on the context, the word "if" as used herein may be interpreted as "when ..." or "while ... " or "in response to determining".

First, communication technologies related to embodiments of this application are described.

### Subband non-overlapping full duplex (Subband Non-Overlapping Full Duplex, SBFD):

SBFD is proposed to overcome problems such as weak uplink coverage, long uplink delay, and insufficient uplink capacity caused by fewer uplink (Uplink, UL) resources allocated in the time division duplex (Time Division Duplexing, TDD) technology. The SBFD technology is a technology with which data can be transmitted and received simultaneously on different subbands of a same subframe, a same slot, or a same symbol. The SBFD technology is mainly used on a network device side, and a terminal device (User Equipment, UE) side still maintains a current state, that is, data is only transmitted or data is only received in a same subframe/slot/symbol. The SBFD technology may also be referred to as a cross-division duplex (Cross Division Duplex, XDD) technology.

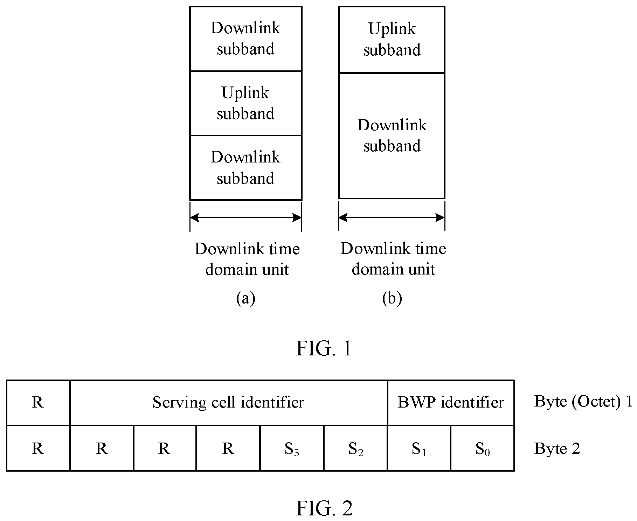

For example, the SBFD technology is shown in FIG. 1. A part of a frequency domain resource corresponding to a downlink (Downlink, DL) time domain unit is configured as an uplink subband. As shown in FIG. 1(a), an intermediate subband of a frequency domain resource corresponding to a downlink time domain unit is configured as an uplink subband, or as shown in FIG. 1(b), an upper subband of a frequency domain resource corresponding to a downlink time domain unit is configured as an uplink subband.

In this application, the time domain unit includes at least one of the following: a frame (Frame), a subframe (Subframe), a slot (Slot), a mini-slot (Mini-Slot), a sub-slot, a symbol (Symbol), a symbol group, or a time domain unit based on another time unit.

Generally, an SBFD operation meets the following requirements:
The SBFD operation is performed within a TDD carrier (SBFD operation within a TDD carrier).

An SBFD scheme is designed within a single uplink and downlink BWP pair with aligned center frequencies (SBFD scheme within a single configured DL and UL BWP pair with aligned center frequencies).

Within a TDD carrier, one SBFD symbol (excluding a legacy uplink symbol) has at most one uplink subband (Up to one UL subband for SBFD operation in an SBFD symbol (excluding legacy UL symbol) within a TDD carrier). The uplink subband may be located in the middle of the TDD carrier, or may be located on either side of the TDD carrier.

This uplink subband may be configured in a downlink symbol (DL symbol) and/or a flexible symbol (Flexible Symbol) configured in TDD-uplink-downlink configuration common (TDD-UL-DL-ConfigurationCommon) signaling.

When an uplink occupies the full bandwidth, the SBFD technology is referred to as a dynamic TDD (Dynamic TDD) technology. This may be considered as an extreme case of the SBFD technology, and slot-based dynamic adaptation may be performed on a transmission direction of a time domain resource.

### Channel state information (Channel State Information, CSI) framework (Framework):

To detect a radio channel status, a CSI measurement reporting mechanism is introduced. Specifically, the network device transmits a downlink channel state information reference signal (Channel State Information-Reference Signal, CSI-RS), and the terminal device estimates quality of a current radio channel by measuring the CSI-RS, and reports a measurement result to the network device, so that the network device properly schedules the terminal device. The CSI framework mainly includes two parts: resource configuration and reporting configuration.

The resource configuration is mainly implemented through a radio resource control (Radio Resource Control, RRC) layer signaling *CSI-ResourceConfig IE*. Each *CSI-ResourceConfig* includes one or more CSI resource sets (CSI Resource Set), or each *CSI-ResourceConfig* is associated with one or more CSI resource sets. Each CSI resource set is located in a DL BWP indicated by a higher-layer parameter *bwp-Id* in the *CSI-ResourceConfig IE*. These CSI resource sets may include one or more of the following: a Non-zero power CSI-RS resource set (Non-Zero-Power CSI-RS Resource Set, NZP CSI-RS Resource Set), a synchronization signal block set/synchronization signal block resource set (Synchronization Signal/Physical Broadcast Channel Block Resource Set, SS/PBCH Block Resource Set, SS/PBCH Block Resource Set, SSB Resource Set), or a CSI interference measurement resource set (CSI Interference Measurement Resource Set, CSI-IM Resource Set).

Each NZP CSI-RS resource set is configured by an *NZP-CSI-RS-ResourceSet IE*. Each NZP CSI-RS resource set includes one or more NZP CSI-RS resources, or each NZP CSI-RS resource set is associated with one or more NZP CSI-RS resources. Each NZP CSI-RS resource is configured by an *NZP-CSI-RS-Resource IE*.

Each SSB resource set is configured by a *CSI-SSB-ResourceSet IE*. Each SSB resource set includes one or more SSBs, or each SSB resource set is associated with one or more SSBs. Each SSB resource set is configured in a *ServingCellConfigCommon IE*.

Each CSI-IM resource set is configured by a *CSI-IM-ResourceSet IE*. Each CSI-IM resource set includes one or more CSI-IM resources, or each CSI-IM resource set is associated with one or more CSI-IM resources. Each CSI-IM resource is configured by a *CSI-IM-Resource IE*.

In addition, the CSI-ResourceConfig IE further specifies time-domain behavior of these CSI-RS resources (set), which includes, for example, time-domain behavior of NZP CSI-RS resources (set) and CSI-IM resources (set). Time domain behavior of CSI-RS resources (set) in a same resource configuration *CSI-ResourceConfig* may be configured to periodic (Periodic), semi-persistent (Semi-persistent), or aperiodic (Aperiodic) by using a higher-layer parameter *resourceType* in the *CSI-ResourceConfig IE*.

The reporting configuration is mainly implemented through an RRC layer signaling *CSI-ReportConfig IE*. Each *CSI-ReportConfig* includes one or more resource configurations (*CSI-ResourceConfig*), or each *CSI-ReportConfig* is associated with one or more resource configurations, to indicate a resource configuration used for channel measurement and/or interference measurement. In addition, each *CSI-ReportConfig* further includes configuration parameters such as codebook configuration, time domain behavior, channel quality indicator (Channel Quality Indicator, CQI) and precoding matrix indicator (Precoding Matrix Indicator, PMI) frequency domain granularities, measurement restriction configuration, and CSI-related indicator reported by UE. The codebook configuration is used to configure one or more of Type I, Type II, or Enhanced Type II codebook, or codebook subset restriction. The time domain behavior may be periodic, semi-persistent (semiPersistentOnPUCCH) based on a physical uplink control channel (Physical Uplink Control Channel, PUCCH), semi-persistent (semiPersistentOnPUSCH) based on a physical uplink shared channel (Physical Uplink Shared Channel, PUSCH), or aperiodic. The CQI and PMI frequency domain granularities may be a granularity of a wideband, or may be a granularity of a subband. The measurement restriction configuration includes channel measurement restriction and interference measurement restriction. The CSI-related indicator reported by UE includes at least one of the following: CQI, PMI, CSI-RS resource indicator (CSI-RS Resource Indicator, CRI), SSB resource indicator (SS/PBCH Block Resource Indicator, SSBRI), layer indicator (Layer Indicator, LI), rank indicator (Rank Indicator, RI), layer 1 reference signal received power (L1-Reference Signal Receiving Power, L1-RSRP), or layer 1 signal-to-interference-plus-noise ratio (L1-Signal to Interference plus Noise Ratio, L1-SINR).

Periodic CSI reporting takes effect immediately after RRC-layer signaling is configured, and no further activation or triggering of a media access control control element (Medium Access Control Control Element, MAC CE) or downlink control information (Downlink Control Information, DCI) is required. Before the terminal device transmits a CSI report, first the network device needs to transmit a CSI-RS resource to the terminal device based on a resource configuration and then the terminal device can measure the corresponding CSI-RS resource, so as to calculate and report the CSI report. Slots for periodic reporting by the terminal device need to meet a condition agreed upon.

Semi-persistent CSI reporting is classified into two types: The CSI report is transmitted on a PUCCH, or the CSI report is transmitted on a PUSCH.

For a case in which the CSI report is transmitted on the PUCCH, first, one or more CSI-ReportConfig configurations whose reportConfigType is semiPersistentOnPUCCH are configured for the terminal device by using RRC layer signaling. Then, a MAC CE for activating PUCCH-based semi-persistent CSI reporting at a MAC layer is used to notify the terminal device which CSI-ReportConfig is activated, or a MAC CE for deactivating PUCCH-based semi-persistent CSI reporting at a MAC layer is used to notify the terminal device which CSI-ReportConfig is inactive.

With reference to FIG. 2, an Sᵢ (i = 0, 1, 2, 3...) field is used to indicate an active/inactive state of a semi-persistent CSI reporting configuration in csi-ReportConfigToAddModList in CSI-MeasConfig. S₀ indicates a configuration of PUCCH-based semi-persistent CSI reporting with minimum CSI-ReportConfigId in csi-ReportConfigToAddModList, and the rest may be deduced by analogy. If a quantity of PUCCH-based semi-persistent CSI reporting configurations associated with a UL BWP in csi-ReportConfigToAddModList is less than i + 1, Sᵢ and subsequent fields are ignored. For example, Sᵢ = 1 indicates that a corresponding PUCCH-based semi-persistent CSI reporting configuration is active, and Sᵢ = 0 indicates that a corresponding PUCCH-based semi-persistent CSI reporting configuration is inactive.

When the CSI report is transmitted on the PUSCH, the network device configures one or more trigger states *CSI-SemiPersistentOnPUSCH-TriggerState* for the UE by using a higher layer parameter *CSI-SemiPersistentOnPUSCH-TriggerStateList* in the RRC signaling *CSI-MeasConfig IE*. Then, the UE monitors a CSI request field of a DCI format (format) 0_1/0_2, and determines triggered CSI-SemiPersistentOnPUSCH-TriggerState based on the CSI request field.

For aperiodic CSI reporting, first, the network device configures one or more trigger states *CSI-AperiodicTriggerState* for the terminal device by using a higher layer parameter *CSI-AperiodicTriggerStateList* in the RRC layer signaling *CSI-MeasConfig IE*. Then, the terminal device monitors the CSI request field of the DCI format 0_1/0_2, and determines triggered CSI-AperiodicTriggerState based on the CSI request field. Each CSI-AperiodicTriggerState includes one or more CSI-ReportConfig configurations associated with CSI-AperiodicTriggerState, and an associated resource set used for channel measurement and/or interference measurement. The resource set includes, for example, at least one of the following: an NZP CSI-RS resource set, a CSI-IM resource set, or an SSB resource set.

Either an SBFD technology in which an uplink subband is embedded into a downlink slot or a dynamic TDD technology in which a transmission direction of each slot is flexibly changed faces a problem of interference between terminal devices caused due to configuration flexibility of each terminal device, such as cross-link interference (Cross Link Interference, CLI). That is, when neighboring terminal devices are configured with different transmission directions, a terminal device that receives a downlink channel is interfered by uplink transmission of a neighboring terminal device.

In order to use a better scheduling policy to deal with the CLI problem, accurate evaluation of downlink quality and/or interference signal strength is required. However, a conventional CSI measurement reporting mechanism is insufficient to meet requirements of SBFD or dynamic TDD technologies, in terms of setting of measurement quantities and granularities, for identification of interference signal strength and measurement of channel quality. In addition, CLI reporting in the related art is based on a layer 3 filtering (L3 Filtering) mechanism, and reflects stable long-term interference strength, and cannot effectively reflect strength of interference between neighboring terminal devices in a timely manner, which cannot assist the network device in quickly responding to the CLI problem.

Therefore, this application provides a configuration method to facilitate effective evaluation and timely reporting of link quality and/or interference strength.

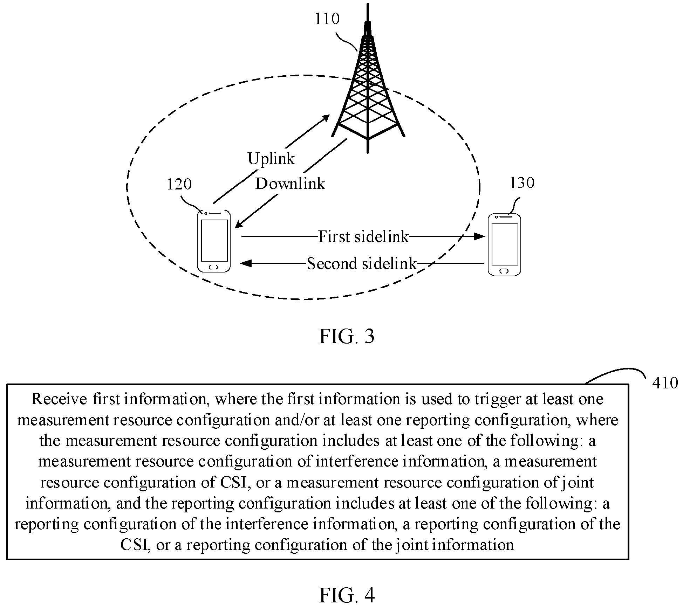

FIG. 3 is a schematic diagram of a communication system according to an example embodiment of this application. The communication system includes a network device 110 and a terminal device 120, and may further include or not include a terminal device 130, which is not limited in this application.

The network device 110 in this application provides a wireless communication function. The network device 110 includes but is not limited to: an evolved nodeB (Evolved NodeB, eNB), a radio network controller (Radio Network Controller, RNC), a nodeB (NodeB, NB), a base station controller (Base Station Controller, BSC), a base transceiver station (Base Transceiver Station, BTS), a home base station (for example, Home Evolved NodeB, or Home NodeB, HNB), a baseband unit (Baseband Unit, BBU), a distributed unit (Distributed Unit, DU), an access point (Access Point, AP), a wireless relay node, a wireless backhaul node, a transmission point (Transmission Point, TP), a transmission and reception point (Transmission and Reception Point, TRP), or the like; or may be a next generation nodeB (Next Generation NodeB, gNB) or a transmission point (TRP or TP) in a fifth generation (5th Generation, 5G) mobile communication system, or may be one antenna panel or an antenna panel group (including a plurality of antenna panels) of a base station in a 5G system, or may be a base station or the like in a beyond fifth generation mobile communication system (Beyond Fifth Generation, B5G) or 6th generation (6th Generation, 6G) mobile communication system, or may be a core network (Core Network, CN), fronthaul (Fronthaul), backhaul (Backhaul), radio access network (Radio Access Network, RAN), a network slice, or the like, or may be a serving cell, a primary cell (Primary Cell, PCell), a primary secondary cell (Primary Secondary Cell, PSCell), a special cell (Special Cell, SpCell), a secondary cell (Secondary Cell, SCell), a neighboring cell, or the like for a terminal device.

The terminal device 120 in this application is also referred to as user equipment (User Equipment, UE), an access terminal, a subscriber unit, a subscriber station, a mobile site, a mobile station, a remote station, a remote terminal, a mobile device, a user terminal, a terminal, a wireless communication device, a user agent, and a user apparatus. The terminal includes but is not limited to: a handheld device, a wearable device, a vehicle-mounted device, and an Internet of Things device, for example: a mobile phone, a tablet computer, an e-book reader, a laptop computer, a desktop computer, a television, a game console, a station (Station, STA), a mobile Internet device (Mobile Internet Device, MID), an augmented reality (Augmented Reality, AR) terminal, a virtual reality (Virtual Reality, VR) terminal, a mixed reality (Mixed Reality, MR) terminal, an extended reality (Extended Reality, XR) terminal, a baffle reality (Baffle Reality, BR) terminal, a cinematic reality (Cinematic Reality, CR) terminal, a deceive reality (Deceive Reality, DR) terminal, a wearable device, a handle, an electronic label, a controller, a wireless terminal in industrial control (Industrial Control), a wireless terminal in self driving (Self Driving), a remote medical (Remote Medical) wireless terminal, a wireless terminal in smart grid (Smart Grid), a wireless terminal in transportation safety (Transportation Safety), a wireless terminal in smart city (Smart City), a wireless terminal in smart home (Smart Home), a wireless terminals in remote medical surgery (Remote Medical Surgery), a cellular phone, a cordless phone, a session initiation protocol (Session Initiation Protocol, SIP) phone, a wireless local loop (Wireless Local Loop, WLL) station, a personal digital assistant (Personal Digital Assistant, PDA), a television set-top box (Set Top Box, STB), or customer premises equipment (Customer Premises Equipment, CPE).

In some embodiments, the network device 110 and the terminal device 120 communicate with each other by using an air interface technology, for example, a Uu interface.

For example, there are two communication scenarios between the network device 110 and the terminal device 120: an uplink communication scenario and a downlink communication scenario. Uplink communication, or referred to as uplink transmission, means transmitting a signal or data to the network device 110. Downlink communication, or referred to as downlink transmission, means transmitting a signal or data to the terminal device 120.

In some embodiments, the terminal device 120 and the terminal device 130 communicate with each other by using an air interface technology, for example, a PC5 interface.

For example, there are two communication scenarios between the terminal device 120 and the terminal device 130: a first sidelink communication scenario and a second sidelink communication scenario. The first sidelink communication means transmitting a signal to the terminal device 130. The second sidelink communication means transmitting a signal to the terminal device 120.

In some embodiments, both the terminal device 120 and the terminal device 130 are within network coverage and are located in a same cell; or both the terminal device 120 and the terminal device 130 are within network coverage but are located in different cells; or the terminal device 120 is within network coverage but the terminal device 130 is outside the network coverage.

The technical solutions provided in embodiments of this application may be applied to various communication systems, for example: a long term evolution (Long Term Evolution, LTE) system, a frequency division duplex (Frequency Division Duplex, FDD) system, a time division duplex (Time Division Duplex, TDD) system, an XDD system, an advanced long term evolution (Advanced Long Term Evolution, LTE-A) system, a universal mobile telecommunication system (Universal Mobile Telecommunication System, UMTS), a worldwide interoperability for microwave access (Worldwide Interoperability for Microwave Access, WiMAX) communication system, a 5G mobile communication system, a new radio (New Radio, NR) system, an evolved system of an NR system, an LTE-based access to unlicensed spectrum (LTE-based access to unlicensed spectrum, LTE-U) system, an NR-based access to unlicensed spectrum (NR-based access to unlicensed spectrum, NR-U) system, a terrestrial networks (Terrestrial Networks, TN) system, a non-terrestrial networks (Non-Terrestrial Networks, NTN) system, a wireless local area network (Wireless Local Area Networks, WLAN), a wireless fidelity (Wireless Fidelity, Wi-Fi) system, a cellular Internet of Things system, and a cellular passive Internet of Things system. The technical solutions may also be applicable to a subsequent evolved system of a 5G NR system, and may also be applicable to a B5G or 6G system and subsequent evolved systems. In some embodiments of this application, "NR" may also be referred to as a 5G NR system or a 5G system. The 5G mobile communication system may include non-standalone (Non-Standalone, NSA) networking and/or standalone (Standalone, SA) networking.

The technical solutions provided in embodiments of this application may be further applied to machine-type communication (Machine Type Communication, MTC), a long term evolution-machine (Long Term Evolution-Machine, LTE-M) technology, a device-to-device (Device to Device, D2D) network, a machine-to-machine (Machine to Machine, M2M) network, an Internet of Things (Internet of Things, IoT) network, or another network. The IoT network may include, for example, an internet of vehicles. Communication manners in an internet of vehicles system are collectively referred to as vehicle-to-X (Vehicle-to-X, V2X, where X may represent anything). For example, the V2X may include vehicle-to-vehicle (Vehicle-to-Vehicle, V2V) communication, vehicle-to-infrastructure (Vehicle-to-Infrastructure, V2I) communication, vehicle-to-pedestrian (Vehicle-to-Pedestrian, V2P) communication, vehicle-to-network (Vehicle-to-Network, V2N) communication, or the like.

The mobile communication system provided in embodiments of this application may be applied to but is not limited to at least one of the following communication scenarios: an uplink communication scenario, a downlink communication scenario, and a sidelink communication scenario.

FIG. 4 is a schematic flowchart of a configuration method according to some example embodiments of this application. For example, the method is performed by UE. The UE may be implemented as the terminal device 120 and/or the terminal device 130 shown in FIG. 3. The method includes at least a part of the following steps.

**Step 410**: Receive first information, where the first information is used to trigger at least one measurement resource configuration and/or at least one reporting configuration, where the measurement resource configuration includes at least one of the following: a measurement resource configuration of interference information, a measurement resource configuration of CSI, or a measurement resource configuration of joint information, and the reporting configuration includes at least one of the following: a reporting configuration of the interference information, a reporting configuration of the CSI, or a reporting configuration of the joint information.

The joint information refers to joint information of the interference information and the CSI. In this application, the joint information may be understood as a unified representation of the interference information and the CSI, or may be understood as information obtained through joint calculation based on the interference information and the CSI, or may be understood as a combination of the interference information and the CSI. Regardless of the understanding, the joint information is associated with both the interference information and the CSI.

In this application, the interference information indicates interference from another UE to the UE that performs step 410. For ease of description, the UE that performs step 410 is referred to as first UE, and the another UE is referred to as second UE. Optionally, the second UE is neighboring UE of the first UE, and the interference information may be understood as interference between neighboring UEs. Optionally, the first UE and the second UE are located in a same cell, and the interference information may be understood as interference between UEs within the same cell. Optionally, the first UE and the second UE are located in different adjacent cells, and the interference information may be understood as interference between adjacent cells.

In some embodiments, the first UE uses an SBFD technology, or a dynamic TDD technology, or an XDD technology, or supports a first operation. The first operation refers to a technology in which data may be transmitted and received simultaneously on different subbands corresponding to a same time domain unit. For example, the first operation includes an SBFD operation (SBFD Operation) or an XDD operation (XDD Operation). It may be understood that the first operation may also be referred to as another name other than the SBFD operation and the XDD operation, for example, a new term that may be agreed upon in a future communication protocol. A specific name of the first operation is not limited in this application.

In some embodiments, a frequency domain resource corresponding to a time domain unit used by the first UE includes an uplink subband and a downlink subband, and the first UE performs downlink transmission by using the downlink subband. For example, with reference to FIG. 1, a frequency domain resource corresponding to a downlink time domain unit used by first UE includes both a downlink subband and an uplink subband.

In some embodiments, the frequency domain resource corresponding to the time domain unit used by the first UE includes a downlink wideband, and the second UE performs downlink transmission by using the downlink wideband. In other words, a frequency domain resource occupied by the downlink transmission of the first UE includes an entire wideband.

In some embodiments, a frequency domain resource corresponding to a time domain unit used by the second UE includes an uplink subband and a downlink subband, and the second UE performs uplink transmission by using the uplink subband.

In some embodiments, the frequency domain resource corresponding to the time domain unit used by the second UE includes an uplink wideband, and the second UE performs uplink transmission by using the uplink wideband. In other words, a frequency domain resource occupied by the uplink transmission of the second UE includes an entire wideband.

In some embodiments, that the UE performs downlink transmission may be understood as follows: The UE is performing downlink transmission, or the UE needs to perform downlink transmission, or the UE is about to perform downlink transmission, or the UE expects to perform downlink transmission. Optionally, that the UE performs uplink transmission may be understood as follows: The UE is performing uplink transmission, or the UE needs to perform uplink transmission, or the UE is about to perform uplink transmission, or the UE expects to perform uplink transmission.

In this application, a subband may also be referred to as a frequency subband. The uplink subband may be understood as a part of frequency domain resources in a single carrier that are used only for uplink transmission. The downlink subband may be understood as a part of frequency domain resources in a single carrier that are used only for downlink transmission.

In some embodiments, that the first information is used to trigger the at least one measurement resource configuration and/or the at least one reporting configuration may be understood as follows: the first information is used to activate the at least one measurement resource configuration and/or the at least one reporting configuration, or may be understood as follows: the first information is used to determine the at least one measurement resource configuration and/or the at least one reporting configuration, or may be understood as follows: the first information is used to indicate the at least one measurement resource configuration and/or at least one reporting configuration, or may be understood as follows: the first information is used to request the UE to perform measurement based on the at least one measurement resource configuration, and/or request the UE to perform reporting based on the at least one reporting configuration, or may be understood as follows: the first information is used to instruct the UE to perform measurement based on the at least one measurement resource configuration, and/or instruct the UE to perform reporting based on the at least one reporting configuration.

In conclusion, according to the method provided in this embodiment of this application triggering a measurement configuration and/or a reporting configuration for UE by using first information is supported, so that the UE obtains a channel state and/or interference information in a timely manner, to report the channel state and/or the interference information in a timely manner, thereby assisting a network device in learning an intra-system communication status and adjusting a scheduling policy in a timely manner. This ensures communication efficiency and reliability in a communication system.

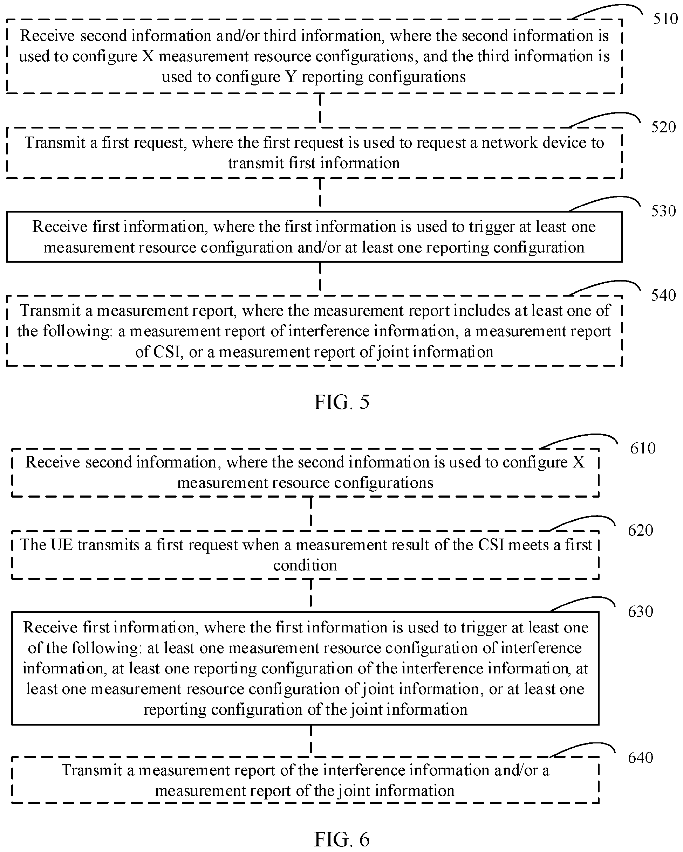

**In some embodiments, step 410 may also be implemented as step 530. Optionally, in addition to step 530, the configuration method further includes at least one of the following: step 510, step 520, or step 540, as shown in** **FIG. 5****.**

FIG. 5 is a schematic flowchart of a configuration method according to some example embodiments of this application. For example, the method is performed by UE. The UE may be implemented as the terminal device 120 and/or the terminal device 130 shown in FIG. 3. The method includes at least a part of the following steps.

**Step 510**: Receive second information and/or third information, where the second information is used to configure X measurement resource configurations, and the third information is used to configure Y reporting configurations.

X is an integer greater than or equal to 1, and Y is an integer greater than or equal to 1.

The following describes each type of configuration. It should be emphasized that, in step 510, only one of the following six configurations may be configured, or any multiple of the following six configurations may be configured. In this embodiment of this application, various types of configurations may be freely combined. In addition, there may be one or more configurations of each type. For example, the second information is used to configure one measurement resource configuration of interference information or a plurality of measurement resource configurations of interference information. Configurations of other types are similar thereto, and are not listed one by one.

(1) to (3) are measurement resource configurations.

From a time domain perspective, the measurement resource configuration is used to configure a periodic time domain resource, a semi-persistent time domain resource, an aperiodic time domain resource, or a trigger-based time domain resource.

From a frequency domain perspective, the measurement resource configuration may configure a frequency domain resource at a granularity of a wideband, or configure a frequency domain resource at a granularity of a subband. Optionally, the measurement resource configuration is used to configure one or more subbands, and different subbands include same quantities or different quantities of resource blocks (Resource Block, RB).

### (1) Measurement resource configuration of interference information

In some embodiments, each measurement resource configuration of interference information includes at least one interference information measurement resource set, or each measurement resource configuration of interference information is associated with at least one interference information measurement resource set.

In some embodiments, each interference information measurement resource set includes: at least one first measurement resource and/or at least one second measurement resource. The first measurement resource is used to obtain cross-link interference signal strength indication information and/or a cross-link interference signal strength value, and the second measurement resource is used to obtain uplink reference signal power indication information and/or an uplink reference signal power value.

In some embodiments, the cross-link interference signal strength indication information is used to indicate a magnitude relationship between the cross-link interference signal strength value and a fifth threshold, and the fifth threshold is configured by a network device, agreed upon in a communication protocol, or autonomously determined by the UE. Optionally, the cross-link interference signal strength value includes a cross-link interference-received signal strength indicator (Cross Link Interference-Received Signal Strength Indicator, CLI-RSSI) value, and the cross-link interference signal strength indication information includes CLI-RSSI indication information.

In some embodiments, the uplink reference signal power indication information is used to indicate a magnitude relationship between the uplink reference signal power value and a sixth threshold, and the sixth threshold is configured by the network device, agreed upon in a communication protocol, or autonomously determined by the UE. Optionally, the uplink reference signal power value includes a sounding reference signal received power (Sounding Reference Signal-Reference Signal Receiving Power, SRS-RSRP) value, and the uplink reference signal power indication information includes SRS-RSRP indication information.

Compared with a specific cross-link interference signal strength value and uplink reference signal power value, the cross-link interference signal strength indication information and the uplink reference signal power indication information have lower resource overheads. Particularly, in a case that a reporting frequency is relatively high, for example, in a periodic or semi-persistent reporting process, overheads can be significantly reduced by reporting indication information.

In some embodiments, a time domain characteristic of the first measurement resource is periodic, semi-persistent, or aperiodic. A time domain characteristic of the second measurement resource is periodic, semi-persistent, or aperiodic. That is, a measurement resource included in the interference information measurement resource set is used to configure a periodic time domain resource, a semi-persistent time domain resource, or an aperiodic time domain resource.

In some embodiments, the first measurement resource is used to configure a frequency domain resource at a granularity of a wideband, or configure a frequency domain resource at a granularity of a subband. The second measurement resource is used to configure a frequency domain resource at a granularity of a wideband, or configure a frequency domain resource at a granularity of a subband.

For example, in a case that the frequency domain resource is configured at a granularity of a wideband, the frequency domain resource configured in the interference information measurement resource set starts from a first start RB, and includes a first quantity of RBs in total.

For example, in a case that the frequency domain resource is configured at a granularity of a subband, the frequency domain resource configured in the interference information measurement resource set includes one or more subbands. Optionally, a plurality of subbands included in the frequency domain resource configured in the interference information measurement resource set are consecutive or inconsecutive in frequency domain. Optionally, in the plurality of subbands included in the frequency domain resource configured in the interference information measurement resource set, quantities of RBs in different subbands are the same or different. Optionally, subbands included in the frequency domain resource configured in the interference information measurement resource set are divided in a first subband configuration manner. Optionally, in the first subband configuration manner, RBs of a first quantity are evenly divided into a plurality of subbands. In this case, in the plurality of subbands included in the frequency domain resource configured in the interference information measurement resource set, different subbands have a same quantity of RBs. Optionally, in the first subband configuration manner, RBs of a first quantity are unevenly divided. In this case, in the plurality of subbands included in the frequency domain resource configured in the interference information measurement resource set, different subbands have different quantities of RBs. Optionally, a subband configuration manner used for the first measurement resource is the same as or different from a subband configuration manner used for the second measurement resource.

### (2) Measurement resource configuration of CSI

In some embodiments, each measurement resource configuration of CSI includes at least one CSI measurement resource set and/or at least one SRS measurement resource set. Alternatively, each measurement resource configuration of CSI is associated with at least one CSI measurement resource set and/or at least one SRS measurement resource set.

In some embodiments, each CSI measurement resource set includes at least one CSI-RS measurement resource and/or at least one CSI-IM measurement resource. Each SRS measurement resource set includes at least one SRS measurement resource.

In some embodiments, a time domain characteristic of the CSI-RS measurement resource is periodic, semi-persistent, or aperiodic. A time domain characteristic of the CSI-IM measurement resource is periodic, semi-persistent, or aperiodic. That is, a measurement resource included in the CSI measurement resource set is used to configure a periodic time domain resource, a semi-persistent time domain resource, or an aperiodic time domain resource.

In some embodiments, a time domain characteristic of the SRS measurement resource is periodic, semi-persistent, or aperiodic. That is, a measurement resource included in the SRS measurement resource set is used to configure a periodic time domain resource, a semi-persistent time domain resource, or an aperiodic time domain resource.

In some embodiments, the CSI-RS measurement resource is used to configure a frequency domain resource at a granularity of a wideband, or configure a frequency domain resource at a granularity of a subband. The CSI-IM measurement resource is used to configure a frequency domain resource at a granularity of a wideband, or configure a frequency domain resource at a granularity of a subband. The SRS measurement resource is used to configure a frequency domain resource at a granularity of a wideband, or configure a frequency domain resource at a granularity of a subband.

For example, in a case that the frequency domain resource is configured at a granularity of a wideband, the frequency domain resource configured in the CSI measurement resource set starts from a first start RB, and includes a first quantity of RBs in total.

For example, in a case that the frequency domain resource is configured at a granularity of a subband, the frequency domain resource configured in the CSI measurement resource set includes one or more subbands. Optionally, a plurality of subbands included in the frequency domain resource configured in the CSI measurement resource set are consecutive or inconsecutive in frequency domain. Optionally, in the plurality of subbands included in the frequency domain resource configured in the CSI measurement resource set, quantities of RBs in different subbands are the same or different. Optionally, subbands included in the frequency domain resource configured in the CSI measurement resource set are divided in a second subband configuration manner. Optionally, in the second subband configuration manner, RBs of a first quantity are evenly divided into a plurality of subbands. In this case, in the plurality of subbands included in the frequency domain resource configured in the CSI measurement resource set, different subbands have a same quantity of RBs. Optionally, in the second subband configuration manner, RBs of a first quantity are unevenly divided. In this case, in the plurality of subbands included in the frequency domain resource configured in the CSI measurement resource set, different subbands have different quantities of RBs. Optionally, a subband configuration manner used for the CSI-RS measurement resource is the same as or different from a subband configuration manner used for the CSI-IM measurement resource.

For example, in a case that the frequency domain resource is configured at a granularity of a wideband, the frequency domain resource configured in the SRS measurement resource set starts from a first start RB, and includes a first quantity of RBs in total.

For example, in a case that the frequency domain resource is configured at a granularity of a subband, the frequency domain resource configured in the SRS measurement resource set includes one or more subbands. Optionally, a plurality of subbands included in the frequency domain resource configured in the SRS measurement resource set are consecutive or inconsecutive in frequency domain. Optionally, in the plurality of subbands included in the frequency domain resource configured in the SRS measurement resource set, quantities of RBs in different subbands are the same or different. Optionally, subbands included in the frequency domain resource configured in the SRS measurement resource set are divided in a third subband configuration manner. Optionally, in the third subband configuration manner, RBs of a first quantity are evenly divided into a plurality of subbands. In this case, in the plurality of subbands included in the frequency domain resource configured in the SRS measurement resource set, different subbands have a same quantity of RBs. Optionally, in the third subband configuration manner, RBs of a first quantity are unevenly divided. In this case, in the plurality of subbands included in the frequency domain resource configured in the SRS measurement resource set, different subbands have different quantities of RBs.

### (3) Measurement resource configuration of joint information

In some embodiments, each measurement resource configuration of joint information includes at least one joint information measurement resource set. Alternatively, each measurement resource configuration of joint information is associated with at least one joint information measurement resource set.

In some embodiments, each joint information measurement resource set includes at least one of the following: at least one first measurement resource, at least one second measurement resource, at least one CSI-RS measurement resource, at least one CSI-IM measurement resource, or at least one SRS measurement resource. For design of each measurement resource, refer to related content in "(1) Measurement resource configuration of interference information" and "(2) Measurement resource configuration of CSI". Details are not described herein again.

(4) to (6) are reporting configurations.

From a time domain perspective, the reporting configuration is used to configure a periodic time domain resource, a semi-persistent time domain resource, an aperiodic time domain resource, or a trigger-based time domain resource.

From a frequency domain perspective, the reporting configuration may be configured at a granularity of a wideband, or configured at a granularity of a subband. Optionally, the reporting configuration is used to configure one or more subbands, and different subbands include same or different quantities of RBs.

### (4) Reporting configuration of interference information

In some embodiments, each reporting configuration of interference information is associated with one or more measurement resource configurations of interference information.

In some embodiments, each reporting configuration of interference information is associated with one or more interference information measurement resource sets.

In some embodiments, each reporting configuration of interference information is associated with one or more first measurement resources.

In some embodiments, each reporting configuration of interference information is associated with one or more second measurement resources.

In some embodiments, a time domain characteristic of the reporting configuration of the interference information is periodic, or semi-persistent, or aperiodic, or trigger-based. That is, the reporting configuration of the interference information instructs the UE to perform periodic reporting, semi-persistent reporting, aperiodic reporting, or event-triggered reporting.

In some embodiments, the reporting configuration of the interference information is configured at a granularity of a wideband, or configured at a granularity of a subband. That is, the reporting configuration of the interference information instructs the UE to report a measurement report of wideband interference information, or instructs the UE to report a measurement report of subband interference information.

In some embodiments, a frequency domain characteristic of the reporting configuration of the interference information is associated with a frequency domain characteristic of the measurement resource configuration of the interference information. For example, if the measurement resource configuration of the interference information is configured at a granularity of a subband, the reporting configuration of the interference information instructs the UE to report a measurement report of the interference information based on a subband of the measurement resource configuration of the interference information. For another example, if the measurement resource configuration of the interference information is configured at a granularity of a wideband, the reporting configuration of the interference information instructs the UE to report a measurement report of the interference information at a granularity of a wideband, or instructs the UE to report a measurement report of the interference information at a granularity of a subband.

For example, in a case that the reporting configuration of the interference information is configured at a granularity of a wideband, the reporting configuration of the interference information instructs the UE to calculate and report the interference information based on a measurement resource on a wideband.

For example, in a case that the reporting configuration of the interference information is configured at a granularity of a subband, the reporting configuration of the interference information instructs the UE to calculate and report the interference information based on a measurement resource on one or more subbands. Optionally, the plurality of subbands are consecutive or inconsecutive in frequency domain. Optionally, different subbands have same or different quantities of RBs. Optionally, subbands indicated by the reporting configuration of the interference information are divided in a fourth subband configuration manner. Optionally, in the fourth subband configuration manner, RBs of a first quantity are evenly divided into a plurality of subbands. In this case, in the plurality of subbands indicated by the reporting configuration of the interference information, different subbands have a same quantity of RBs. Optionally, in the fourth subband configuration manner, RBs of a first quantity of RBs are unevenly divided. In this case, in the plurality of subbands indicated by the reporting configuration of the interference information, different subbands have different quantities of RBs. Optionally, a subband configuration manner used for the reporting configuration of the interference information is the same as or different from a subband configuration manner used for the measurement resource configuration of the interference information.

### (5) Reporting configuration of CSI

In some embodiments, each reporting configuration of CSI is associated with one or more measurement resource configurations of CSI.

In some embodiments, each reporting configuration of CSI is associated with at least one CSI measurement resource set and/or at least one SRS measurement resource set.

In some embodiments, each reporting configuration of CSI is associated with at least one of the following: one CSI-RS measurement resource, a plurality of CSI-RS measurement resources, one CSI-IM measurement resource, a plurality of CSI-IM measurement resources, one SRS measurement resource, or a plurality of SRS measurement resources.

In some embodiments, a time domain characteristic of the reporting configuration of the CSI is periodic, or semi-persistent, or aperiodic, or trigger-based. That is, the reporting configuration of the CSI instructs the UE to periodically report the measurement report of the CSI, or semi-persistently report the measurement report of the CSI, or aperiodically report the measurement report of CSI, or report the measurement report of the CSI in an event-triggered manner.

In some embodiments, the reporting configuration of the CSI is configured at a granularity of a wideband, or configured at a granularity of a subband. That is, the reporting configuration of the CSI instructs the UE to report a measurement report of wideband CSI, or instructs the UE to report a measurement report of subband CSI.

In some embodiments, a frequency domain characteristic of the reporting configuration of the CSI is associated with a frequency domain characteristic of the measurement resource configuration of the CSI. For example, if the measurement resource configuration of the CSI is configured at a granularity of a subband, the reporting configuration of the CSI instructs the UE to report a measurement report of the CSI based on a subband of the measurement resource configuration of the CSI. For another example, if the measurement resource configuration of the CSI is configured at a granularity of a wideband, the reporting configuration of the CSI instructs the UE to report a measurement report of the CSI at a granularity of a wideband, or instructs the UE to report a measurement report of the CSI at a granularity of a subband.

For example, in a case that the reporting configuration of the CSI is configured at a granularity of a wideband, the reporting configuration of the CSI instructs the UE to calculate and report the CSI based on a measurement resource on a wideband.

For example, in a case that the reporting configuration of the CSI is configured at a granularity of a subband, the reporting configuration of the CSI instructs the UE to calculate and report the CSI based on a measurement resource on one or more subbands. Optionally, the plurality of subbands are consecutive or inconsecutive in frequency domain. Optionally, different subbands have same or different quantities of RBs. Optionally, subbands indicated by the reporting configuration of the CSI are divided in a fifth subband configuration manner. Optionally, in the fifth subband configuration manner, RBs of a first quantity are evenly divided into a plurality of subbands. In this case, in the plurality of subbands indicated by the reporting configuration of the CSI, different subbands have a same quantity of RBs. Optionally, in the fifth subband configuration manner, RBs of a first quantity of RBs are unevenly divided. In this case, in the plurality of subbands indicated by the reporting configuration of the CSI, different subbands have different quantities of RBs. Optionally, a subband configuration manner used for the reporting configuration of the CSI is the same as or different from a subband configuration manner used for the measurement resource configuration of the CSI.

### (6) Reporting configuration of joint information

In some embodiments, each reporting configuration of joint information is associated with one or more measurement resource configurations of joint information.

In some embodiments, each reporting configuration of joint information is associated with at least one joint information measurement resource set.

In some embodiments, each reporting configuration of joint information is associated with at least one of the following: one first measurement resource, a plurality of first measurement resources, one second measurement resource, a plurality of second measurement resources, one CSI-RS measurement resource, a plurality of CSI-RS measurement resources, one CSI-IM measurement resource, a plurality of CSI-IM measurement resources, one SRS measurement resource, or a plurality of SRS measurement resources.

In some embodiments, a time domain characteristic of the reporting configuration of the joint information is periodic, or semi-persistent, or aperiodic, or trigger-based. That is, the reporting configuration of the joint information instructs the UE to periodically report the measurement report of the joint information, or semi-persistently report the measurement report of the joint information, or aperiodically report the measurement report of joint information, or report the measurement report of the joint information in an event-triggered manner.

In some embodiments, the reporting configuration of the joint information is configured at a granularity of a wideband, or configured at a granularity of a subband. That is, the reporting configuration of the joint information instructs the UE to report a measurement report of wideband joint information, or instructs the UE to report a measurement report of subband joint information.

In some embodiments, a frequency domain characteristic of the reporting configuration of the joint information is associated with a frequency domain characteristic of the measurement resource configuration of the joint information. For example, if the measurement resource configuration of the joint information is configured at a granularity of a subband, the reporting configuration of the joint information instructs the UE to report a measurement report of the joint information based on a subband of the measurement resource configuration of the joint information. For another example, if the measurement resource configuration of the joint information is configured at a granularity of a wideband, the reporting configuration of the joint information instructs the UE to report a measurement report of the joint information at a granularity of a wideband, or instructs the UE to report a measurement report of the joint information at a granularity of a subband.

For example, in a case that the reporting configuration of the joint information is configured at a granularity of a wideband, the reporting configuration of the joint information instructs the UE to calculate and report the joint information based on a measurement resource on a wideband.

For example, in a case that the reporting configuration of the joint information is configured at a granularity of a subband, the reporting configuration of the joint information instructs the UE to calculate and report the joint information based on a measurement resource on one or more subbands. Optionally, the plurality of subbands are consecutive or inconsecutive in frequency domain. Optionally, different subbands have same or different quantities of RBs. Optionally, subbands indicated by the reporting configuration of the joint information are divided in a sixth subband configuration manner. Optionally, in the sixth subband configuration manner, RBs of a first quantity are evenly divided into a plurality of subbands. In this case, in the plurality of subbands indicated by the reporting configuration of the joint information, different subbands have a same quantity of RBs. Optionally, in the sixth subband configuration manner, RBs of a first quantity of RBs are unevenly divided. In this case, in the plurality of subbands indicated by the reporting configuration of the joint information, different subbands have different quantities of RBs. Optionally, a subband configuration manner used for the reporting configuration of the joint information is the same as or different from a subband configuration manner used for the measurement resource configuration of the joint information.

In some embodiments, the first subband configuration manner, the second subband configuration manner, the third subband configuration manner, the fourth subband configuration manner, the fifth subband configuration manner, and the sixth subband configuration manner are the same or different.

In this application, if the measurement resource/reporting configuration is configured at a granularity of a wideband, overheads can be effectively reduced. If the measurement resource/reporting configuration is configured at a granularity of a subband, a channel state and/or interference information on a subband can be accurately and flexibly obtained, which helps the network device adjust a scheduling policy more accurately and flexibly, improving scheduling performance. Particularly, for a communication scenario in which an SBFD technology/dynamic TDD technology is used, configuration using a subband as a granularity better meets a measurement requirement, and supports the network device in obtaining a transmission status of one or more subbands in a timely manner.

In this application, if a subband configuration manner is to obtain a plurality of subbands by evenly dividing a wideband, relatively simplicity is achieved, implementation is easy, complexity is reduced, and communication efficiency is improved. If the subband configuration manner is to obtain a plurality of subbands by unevenly dividing a wideband, higher flexibility and adaptability are achieved, and the measurement resource/reporting configuration can be flexibly configured based on a communication requirement and a wideband status. This helps the network device more flexibly obtain a transmission status on a part of frequency domain resources and more flexibly adjust a scheduling policy.

In some embodiments, the second information and the third information are carried in a same signal. Alternatively, the second information and the third information are separately carried through different signals.

Step 510 is an optional step.

**Step 520**: Transmit a first request, where the first request is used to request the network device to transmit the first information.

In some embodiments, the UE transmits the first request in a case of receiving the second information and/or the third information.

In some embodiments, the UE transmits the first request in a case of expecting to report the measurement report.

In some embodiments, the UE transmits the first request in a case that a measurement result of the CSI meets a first condition. A case in which the measurement result of the CSI meets the first condition includes: a downlink signal measurement result is less than a first threshold, or the downlink signal measurement result is equal to the first threshold. The first threshold is agreed upon in a communication protocol, configured by the network device, or autonomously determined by the UE.

In some embodiments, the downlink signal measurement result includes at least one of the following: a signal strength indicator value of a downlink signal, a channel quality indicator value of the downlink signal, or a second SINR of the downlink signal, where the second SINR is obtained based on the measurement resource configuration of the CSI. For example, the signal strength indicator value of the downlink signal includes an RSSI of the downlink signal. For example, the channel quality indicator value of the downlink signal includes a CQI of the downlink signal.

It should be noted that the downlink signal measurement result may be a single measurement result, or an average value/maximum value/minimum value/median value of a plurality of measurement results, or the like.

In some embodiments, the first condition is configured by the network device through RRC signaling. For example, the first condition is configured by reportConfigType. For example, the network device configures reportConfigType for the UE as an event-triggered (Event-Trigger) measurement resource configuration and/or reporting configuration, and configures the first condition.

In some embodiments, the first request implicitly requests the network device to transmit the first information, or the first request explicitly requests the network device to transmit the first information.

Step 520 is an optional step.

**Step 530**: Receive the first information, where the first information is used to trigger at least one measurement resource configuration and/or at least one reporting configuration.

In some embodiments, the first information triggers a different measurement resource configuration and/or reporting configuration by indicating a different state. For example, in a case that the first information indicates a first state, the first information is used to trigger at least one measurement resource configuration of the interference information and/or at least one reporting configuration of the interference information; in a case that the first information indicates a second state, the first information is used to trigger at least one measurement resource configuration of the CSI and/or at least one reporting configuration of the CSI; or in a case that the first information indicates a third state, the first information is used to trigger at least one measurement resource configuration of joint information and/or at least one reporting configuration of the joint information.

In some embodiments, different first information is designed for different measurement resource configurations/reporting configurations. Different measurement resource configurations/reporting configurations are triggered by transmitting different first information, so that flexibility is relatively good.

In some embodiments, the first information indicates different states by setting a value of a field in the first information. This design not only improves trigger flexibility, but also reduces resource overheads for transmitting trigger information.

**In some embodiments, the network device preconfigures a plurality of trigger states, and then triggers one or more trigger states by using the first information.**

### Manner 1 of preconfiguring a plurality of trigger states:

In some embodiments, the network device preconfigures a plurality of trigger states by using a higher layer parameter *CSI-AperiodicTriggerState*. Each trigger state may be associated with one or more reporting configurations, and each reporting configuration may be associated with one or more measurement resource configurations. For example, it is configured that trigger states 1 to N1 are associated with measurement resource configurations and reporting configurations of the CSI, trigger states N1 to N2 are associated with measurement resource configurations and reporting configurations of the interference information, and trigger states N2 to N3 are associated with measurement resource configurations and the reporting configurations of the joint information. Trigger states preconfigured by *CSI-AperiodicTriggerState* include at least one of the following: a first state, a second state, or a third state. Optionally, a plurality of trigger states are preconfigured by using CSI-AperiodicTriggerState, which is applicable to a case of aperiodic reporting.

In some embodiments, assuming that a quantity of bits of the first information is *N_{bit}*, with the first information being a CSI request field in a DCI format 0_1/0_2 as an example, a quantity of bits of the *CSI request* field is *N_{bit}*. If the quantity of trigger states configured by the network device by using the higher layer parameter is N₃, and N₃>2*^{N^{bit}}* - 1, a MAC CE for an aperiodic CSI trigger state subset selecting is firstly used to map a maximum of 2*^{N^{bit}}* - 1 trigger states to code points (Codepoint) of the *CSI request* field, that is, 2*^{N^{bit}}* - 1 trigger states in N3 are selected by using the MAC CE. The UE determines, by monitoring the *CSI request* field, which trigger states are indicated by the network device.

### Manner 2 of preconfiguring a plurality of trigger states:

In some embodiments, the network device configures a plurality of trigger states by using a higher layer parameter *CSI-SemiPersistentOnPUSCH-TriggerStateLis*t. Each trigger state may be associated with one or more reporting configurations, and each reporting configuration may be associated with one or more measurement resource configurations (which may be periodic, semi-persistent, or aperiodic). The UE determines, by monitoring the first information, namely, a CSI request field in a DCI format 0_1/0_2, a trigger state indicated by the network device. Optionally, a plurality of trigger states are configured by using *CSI-SemiPersistentOnPUSCH-TriggerStateList*, which is applicable to a case of PUSCH-based semi-persistent reporting.

In some embodiments, the network device configures, for the UE by using RRC layer signaling, one or more reporting configurations whose *reportConfigType* is semiPersistentOnPUCCH, and each reporting configuration may be associated with one or more measurement resource configurations (which may be periodic, semi-persistent, or aperiodic). The UE monitors the first information, that is, an Sᵢ field of the MAC CE, to determine which reporting configurations are activated. Optionally, one or more reporting configurations whose *reportConfigType* is semiPersistentOnPUCCH are configured for the UE by using RRC layer signaling, which is applicable to a case of PUCCH-based semi-persistent reporting.

**When the first information indicates the third state, that is, when the reporting configuration of the joint information is triggered, there may be the following two manners:**
Manner 1: In some embodiments, the third state is associated with a reporting configuration of joint information, and the reporting configuration of the joint information is associated with at least one measurement resource configuration of the CSI and/or at least one measurement resource configuration of the interference information. The UE obtains the joint information based on the two types of measurement resource configuration, and reports the joint information measurement report based on the reporting configuration of the joint information. For example, the joint information is a concatenation result of the measurement result of the CSI and a measurement result of the interference information. For example, the joint information is an SINR obtained through calculation based on the measurement result of the CSI and the measurement result of the interference information.
Manner 2: In some embodiments, the third state is associated with a reporting configuration of CSI and a reporting configuration of interference information. The reporting configuration of the CSI is associated with one or more measurement resource configurations of the CSI, and the reporting configuration of the interference information is associated with one or more measurement resource configurations of the interference information. The UE separately obtains a measurement result of the CSI and a measurement result of the interference information based on two types of measurement resource configurations. The UE reports a measurement report of the CSI and a measurement report of the interference information based on two types of reporting configurations. A combination of the measurement report of the CSI and the measurement report of the interference information may be considered as a measurement report of the joint information, that is, the measurement report of the joint information includes the measurement result of the CSI and the measurement result of the interference information.

In some embodiments, the first information includes at least one measurement resource configuration and/or at least one reporting configuration. The measurement resource configuration included in the first information is a measurement resource configuration, used for triggering, in the first information, and the reporting configuration included in the first information is a reporting configuration, used for triggering, in the first information.

In some embodiments, the at least one measurement resource configuration triggered by the first information is one or more of the X measurement resource configurations.

In some embodiments, at least one measurement resource configuration triggered by the first information includes: at least one measurement resource configuration of the interference information; or at least one measurement resource configuration of the CSI; or at least one measurement resource configuration of the joint information; or at least one measurement resource configuration of the interference information and at least one measurement resource configuration of the CSI; or at least one measurement resource configuration of the interference information and at least one measurement resource configuration of the joint information; or at least one measurement resource configuration of the CSI and at least one measurement resource configuration of the joint information; or at least one measurement resource configuration of the interference information, at least one measurement resource configuration of the CSI, and at least one measurement resource configuration of the joint information.

In some embodiments, a semi-persistent measurement resource configuration is activated by a MAC CE, that is, the first information is carried in the MAC CE.

In some embodiments, an aperiodic measurement resource configuration is activated by a DCI format 0_1/0_2, that is, the first information is carried in the DCI format 0_1/0_2.

In some embodiments, at least one reporting configuration triggered by the first information is one or more of the Y reporting configurations.

In some embodiments, the at least one reporting configuration triggered by the first information includes: at least one reporting configuration of the interference information; at least one reporting configuration of the CSI; or at least one reporting configuration of the joint information; or at least one reporting configuration of the interference information and at least one reporting configuration of the CSI; or at least one reporting configuration of the interference information and at least one reporting configuration of the joint information; or at least one reporting configuration of the CSI and at least one reporting configuration of the joint information; or at least one reporting configuration of the interference information, the at least one reporting configuration of the CSI, and at least one reporting configuration of the joint information.

In some embodiments, the first information includes: a CSI-MeasConfig IE in RRC signaling; or a *CSI request* information field in DCI; or an Sᵢ (i=0, 1, 2... ) field in the MAC CE.

In some embodiments, the first information is transmitted by the network device based on the received first request, that is, the first information is triggered by the first request.

In some embodiments, the first information is autonomously transmitted by the network device.

For example, the network device determines, based on the measurement result of the CSI reported by the UE, whether to transmit the first request, and if the measurement result of the CSI is lower than a threshold, the network device transmits the first request to trigger the UE to report a measurement report, where the measurement report includes at least one of the following: a measurement report of the CSI, a measurement report of the interference information, or a measurement report of the joint information.

For example, the network device determines, based on whether the UE is in an overlapping area between a current cell and a neighboring cell, whether to transmit the first request. If the UE is in the overlapping area between the current cell and the neighboring cell, the network device transmits the first request to trigger the UE to report a measurement report, where the measurement report includes at least one of the following: a measurement report of the CSI, a measurement report of the interference information, or a measurement report of the joint information.

For example, the network device determines, based on whether a downlink UE is within signal coverage of an uplink UE (which may be from a current cell or a neighboring cell), whether to transmit the first request, and if the downlink UE is within the signal coverage of the uplink UE in the current cell and/or the neighboring cell, the network device transmits the first request to trigger the UE to report a measurement report, where the measurement report includes at least one of the following: a measurement report of the CSI, a measurement report of the interference information, or a measurement report of the joint information.

For example, the network device determines, based on whether a frequency domain resource used by a downlink UE overlaps a frequency domain resource used by an uplink UE, whether to transmit the first request, and if the frequency domain resource used by the downlink UE overlaps the frequency domain resource used by the uplink UE, the network device transmits the first request to trigger the UE to report a measurement report, where the measurement report includes at least one of the following: a measurement report of the CSI, a measurement report of the interference information, or a measurement report of the joint information.

**Step 540**: Transmit a measurement report, where the measurement report includes at least one of the following: a measurement report of the interference information, a measurement report of the CSI, or a measurement report of joint information.

In some embodiments, the measurement report is obtained through measurement based on the at least one measurement resource configuration, and is transmitted based on the at least one reporting configuration.

In some embodiments, the measurement report is transmitted by the UE based on the received first information.

In some embodiments, the UE transmits the measurement report in a case that a measurement result meets a second condition, where the measurement result includes the measurement result of the CSI and/or the measurement result of the interference information.

In some embodiments, a case in which the measurement result of the CSI meets the second condition includes at least one of the following: the downlink signal measurement result is less than a second threshold; the downlink signal measurement result is equal to the second threshold; an uplink signal measurement result is greater than a third threshold; or the uplink signal measurement result is equal to the third threshold. The second threshold is agreed upon in a communication protocol, configured by the network device, or autonomously determined by the UE. The third threshold is agreed upon in a communication protocol, configured by the network device, or autonomously determined by the UE.

In some embodiments, a case in which the measurement result of the interference information meets the second condition includes at least one of the following: cross-link interference signal strength is greater than a fourth threshold; the cross-link interference signal strength is equal to the fourth threshold; an uplink signal measurement result is greater than a third threshold; or the uplink signal measurement result is equal to the third threshold. The fourth threshold is agreed upon in a communication protocol, configured by the network device, or autonomously determined by the UE. The third threshold is agreed upon in a communication protocol, configured by the network device, or autonomously determined by the UE.

In some embodiments, the cross-link interference signal strength includes CLI-RSSI. Optionally, the cross-link interference signal strength may alternatively be represented by using an SRS-RSRP.

In some embodiments, the uplink signal measurement result includes at least one of the following: signal received power of an uplink signal or a signal strength indication of an uplink signal. For example, signal received power of an uplink signal includes SRS-RSRP. For example, a signal strength indication of an uplink signal includes an SRS-RSSI.

It should be noted that the uplink signal measurement result may be a single measurement result, or an average value/maximum value/minimum value/median value of a plurality of measurement results, or the like. The cross-link interference signal strength may be a single measurement result, or may be an average value/maximum value/minimum value/median value of a plurality of measurement results, or the like.

For related content of the downlink signal measurement result, refer to step 520. Details are not described herein or the following again.

In some embodiments, the second condition is configured by the network device through RRC signaling. For example, the second condition is configured by *reportConfigType*. For example, the network device configures reportConfigType for the UE as an event-triggered (Event-Trigger) measurement resource configuration and/or reporting configuration, and configures the second condition.

The following describes three types of measurement reports in detail. It should be emphasized that, in step 540, only one of the following three types of measurement reports may be transmitted, or any multiple of the following three types of measurement reports may be transmitted. In embodiments of this application, various types of measurement reports can be free combined for transmitting.

### (1) Measurement report of interference information

In some embodiments, the measurement report of the interference information includes a measurement result of the interference information. The measurement result of the interference information includes at least one of the following: a cross-link interference signal strength value, an uplink reference signal power value, cross-link interference signal strength indication information, or uplink reference signal power indication information. The cross-link interference signal strength indication information is used to indicate whether the cross-link interference signal strength value is less than a fifth threshold, or whether the cross-link interference signal strength value is greater than the fifth threshold. The uplink reference signal power indication information is used to indicate whether the uplink reference signal power value is less than a sixth threshold, or whether the uplink reference signal power value is greater than the sixth threshold. The fifth threshold is agreed upon in a communication protocol, configured by the network device, or autonomously determined by the UE. The sixth threshold is agreed upon in a communication protocol, configured by the network device, or autonomously determined by the UE.

In some embodiments, the UE periodically transmits first indication information, where the first indication information is used to indicate that the cross-link interference signal strength value is less than the fifth threshold, and/or the uplink reference signal power value is less than the sixth threshold. The UE transmits the cross-link interference signal strength value and/or the uplink reference signal power value in a case that a third condition is met.

In some embodiments, the UE periodically transmits first indication information, where the first indication information is used to indicate that the cross-link interference signal strength value is less than the fifth threshold, and/or the uplink reference signal power value is less than the sixth threshold. The UE transmits second indication information in a case that a third condition is met, where the second indication information is used to indicate at least one of the following: the cross-link interference signal strength value is greater than the fifth threshold, the cross-link interference signal strength value is equal to the fifth threshold, the uplink reference signal power value is greater than the sixth threshold, or the uplink reference signal power value is equal to the sixth threshold.

Optionally, the UE directly adds the cross-link interference signal strength value to the second indication information, to implicitly indicate a magnitude relationship between the cross-link interference signal strength value and the fifth threshold. Optionally, the UE directly adds the uplink reference signal power value to the second indication information, to implicitly indicate a magnitude relationship between the uplink reference signal power value and the sixth threshold.

Optionally, after transmitting the second indication information, the UE transmits the cross-link interference signal strength value and/or the uplink reference signal power value. The second indication information is used to explicitly indicate: the magnitude relationship between the cross-link interference signal strength value and the fifth threshold, and/or the magnitude relationship between the uplink reference signal power value and the sixth threshold.

In some embodiments, the second indication information is further used to indicate to the network device that the UE is to transmit the cross-link interference signal strength value and/or the uplink reference signal power value in a next uplink transmission.

In some embodiments, the second indication information is further used to request the network device to schedule the UE to transmit the cross-link interference signal strength value and/or the uplink reference signal power value in a next uplink transmission. Optionally, the second indication information is further used to request the network device to schedule more PUSCH resources for the UE, so that the UE transmits the cross-link interference signal strength value and/or the uplink reference signal power in a next uplink transmission.

In some embodiments, the UE further transmits the second request at the same time when transmitting the second indication information. The second request is used to request the network device to schedule the UE to transmit the cross-link interference signal strength value and/or the uplink reference signal power in a next uplink transmission. Optionally, the second request is used to request the network device to schedule more PUSCH resources for the UE, so that the UE transmits the cross-link interference signal strength value and/or the uplink reference signal power in a next uplink transmission.

In some embodiments, a case in which the third condition is met includes at least one of the following: the cross-link interference signal strength value is greater than the fifth threshold, the cross-link interference signal strength value is equal to the fifth threshold, the uplink reference signal power value is greater than the sixth threshold, or the uplink reference signal power value is equal to the sixth threshold.

In some embodiments, the third condition is configured by the network device through RRC signaling. For example, the third condition is configured by *reportConfigType*. For example, the network device configures reportConfigType for the UE as an event-triggered (Event-Trigger) measurement resource configuration and/or reporting configuration, and configures the third condition.

In some embodiments, the measurement report of the interference information is obtained through measurement in a downlink frequency band used by the UE, or is obtained through measurement in a subband not used by the UE. The downlink frequency band may be all downlink frequency bands corresponding to a time domain resource used by the UE, or a part of subbands used for downlink transmission in the downlink frequency bands corresponding to the time domain resource used by the UE. The subband not used by the UE may be a part of the downlink frequency band, or may be all of the downlink frequency band.

In some embodiments, the measurement report of the interference information is obtained through measurement in a downlink frequency band used by the UE, and there is no downlink transmission in at least a part of frequency domain resources in the downlink frequency band. In this case, refer to the configuration of CSI-IM-based measurement reporting. There may be the following four cases in which there is no downlink transmission in at least a part of frequency domain resources in the downlink frequency band: (1) There is no downlink transmission on all frequency domain resources in the downlink frequency band. (2) There is no downlink transmission on one or more subbands in the downlink frequency band. (3) There is no downlink transmission in one or more RBs in the downlink frequency band. (4) There is no downlink transmission in one or more resource elements (Resource Element, RE) in the downlink frequency band.

### (2) Measurement report of CSI

In some embodiments, the measurement report of the CSI includes a measurement result of the CSI. Optionally, the measurement result of the CSI includes at least one of the following: a CQI, an RSSI, or an SINR.

In some embodiments, the UE obtains the measurement result of the interference information in a case that the measurement result of the CSI meets a fourth condition.

In some embodiments, the UE obtains the measurement result of the joint information in a case that the measurement result of the CSI meets the fourth condition.

A case in which the measurement result of the CSI meets the fourth condition includes at least one of the following: the downlink signal measurement result is less than a seventh threshold; the downlink signal measurement result is equal to the seventh threshold; the uplink signal measurement result is greater than an eighth threshold; or the uplink signal measurement result is equal to the eighth threshold.

In some embodiments, the fourth condition is configured by the network device through RRC signaling. For example, the fourth condition is configured by reportConfigType. For example, the network device configures reportConfigType for the UE as an event-triggered (Event-Trigger) measurement resource configuration and/or reporting configuration, and configures the fourth condition.

### (3) Measurement report of joint information

In some embodiments, the measurement report of the joint information includes a measurement result of the joint information. Optionally, the measurement result of the joint information is obtained based on the measurement resource configuration of the joint information, or is obtained based on the measurement resource configuration of the interference information and the measurement resource configuration of the CSI. Optionally, the measurement result of the joint information includes a measurement result of the CSI and a measurement result of the interference information. Optionally, the measurement result of the joint information includes a concatenation result of the measurement result of the CSI and the measurement result of the interference information. Optionally, the measurement result of the joint information includes a calculation result of the measurement result of the CSI and the measurement result of the interference information, for example, the measurement result of the joint information includes a first SINR, and the first SINR is obtained based on the measurement resource configuration of the interference information and the measurement resource configuration of the CSI.

In some embodiments, the measurement report is transmitted through a PUCCH, or the measurement report is transmitted through a PUSCH.

In some embodiments, in a first time period after the UE transmits the first request, if there is no available uplink transmission resource, the UE cancels (Cancel) reporting triggered by the first information. The available uplink transmission resource may be preconfigured, or may be configured/scheduled by the network device after the first request is received.

That the UE cancels the reporting triggered by the first information may be understood as follows: the UE skips (Skip) the reporting triggered by the first information, or may be understood as follows: the UE discards (Drop) the reporting triggered by the first information. That is, even if the UE obtains the measurement report through measurement based on the at least one measurement resource configuration, if there is no available uplink transmission resource, the UE does not transmit the measurement report based on the at least one reporting configuration.

In some embodiments, if a transmission resource in a reporting configuration triggered by the first information overlaps a transmission resource for other uplink information, the transmission resource in the reporting configuration triggered by the first information for transmission is reused for the other uplink information. That is, in a case of resource overlapping/conflict, the transmission resource in the reporting configuration triggered by the first information may be used to transmit the measurement report and other information. The other uplink information includes, for example, a hybrid automatic repeat request (Hybrid Automatic Repeat Request, HARQ)-acknowledgment (Acknowledgement, ACK), and/or periodic CSI.

In some embodiments, if the transmission resource in the reporting configuration triggered by the first information overlaps a transmission resource for other uplink information, transmission of the other uplink information is abandoned/discarded/canceled/skipped. That is, in a case of resource overlapping/conflict, the measurement report is preferentially transmitted. The other uplink information includes, for example, a HARQ-ACK, and/or periodic CSI.

Step 540 is an optional step.

In conclusion, according to the method provided in this embodiment of this application triggering a measurement configuration and/or a reporting configuration for UE by using first information is supported, so that the UE obtains a channel state and/or interference information in a timely manner, to report the channel state and/or the interference information in a timely manner, thereby assisting a network device in learning an intra-system communication status and adjusting a scheduling policy in a timely manner. This ensures communication efficiency and reliability in a communication system. In addition, the UE is allowed to request, based on a measurement result, a network device to transmit the first information, and the UE is further allowed to perform autonomous reporting based on the measurement result, which significantly improves flexibility of a measurement reporting process on a UE side. In this way, a measurement report reported by the UE reflects an actual communication environment in a system more accurately in a more timely manner.

The UE may perform all steps shown in FIG. 5, that is, all optional steps shown in FIG. 5 are used in combination with step 530.

Alternatively, the UE may perform only a part of steps shown in FIG. 5. For example, the UE performs only step 530. For another example, a part of optional steps shown in FIG. 5 are used in free combination with step 530, to form various procedure configuration methods. FIG. 6 to FIG. 8 show three relatively typical combinations as examples, but this does not mean that configuration procedures other than embodiments shown in FIG. 6 to FIG. 8 do not fall within the protection scope of this application.

FIG. 6 is a schematic flowchart of a configuration method according to some example embodiments of this application. For example, the method is performed by UE. The UE may be implemented as the terminal device 120 and/or the terminal device 130 shown in FIG. 3. The method includes at least a part of the following steps.

**Step 610**: Receive second information, where the second information is used to configure X measurement resource configurations.

For related content of the second information and the measurement resource configuration, refer to step 510. Details are not described herein again.

For example, the second information in step 610 is used to configure X measurement resource configurations, including a measurement resource configuration of CSI.

Step 610 is an optional step.

**Step 620**: The UE transmits a first request in a case that a measurement result of the CSI meets a first condition.

In some embodiments, the measurement result of the CSI is obtained through measurement based on the measurement resource configuration of the CSI configured in the second information in step 610.

For content of the measurement result of the CSI, the first condition, and the first request, refer to step 520. Details are not described herein again.

For example, periodic CSI measurement is configured for the UE (for example, the measurement resource configuration of the CSI is configured by using the second information, and a time domain characteristic of the measurement resource configuration of the CSI is periodic), and the UE periodically obtains a measurement result of the CSI. When a measurement result of the CSI obtained for a specific time is less than or equal to a first threshold, the UE considers that downlink channel quality is poor, and the UE transmits the first request to request to report measurement of interference information and/or joint information.

For example, periodic CSI measurement is configured for the UE, and the UE periodically obtains the measurement result of the CSI. When several measurement results of the CSI obtained consecutively are all less than or equal to the first threshold, the UE considers that downlink channel quality is poor, and the UE transmits the first request to request to report measurement of interference information and/or joint information.

For example, periodic CSI measurement is configured for the UE, and the UE periodically obtains the measurement result of the CSI. When an average value (or a maximum value or a minimum value or a median value) of several measurement results of the CSI obtained consecutively is less than or equal to the first threshold, the UE considers that downlink channel quality is poor, and the UE transmits the first request to request to report measurement of interference information and/or joint information.

In some embodiments, the first condition is configured by a network device through RRC signaling. For example, the first condition is configured by *reportConfigType*. For example, the network device configures *reportConfigType* for the UE as an event-triggered (Event-Trigger) measurement resource configuration and/or reporting configuration, and configures the first condition.

In some embodiments, the first request includes a first sequence. For example, when detecting the first sequence, the network device transmits first information to the UE to trigger reporting of a measurement report of the interference information and/or a measurement report of the joint information. For example, the first information includes a DCI format 0_1/0_2.

In some embodiments, the first sequence is a sequence dedicated to representation of the first request. It may be understood that the first sequence is different from an existing sequence, that is, the first sequence is a newly defined sequence.

In some embodiments, the first sequence is a cyclic shift sequence of an existing sequence. Cyclic shift refers to cyclically moving values in a sequence. There are two types of common cyclic shifts: cyclic left shift and cyclic right shift. The cyclic shift left is to place shifted-out high bits to low bits of the sequence, and the cyclic shift right is to place shifted-out low bits to high bits of the sequence. A quantity of bits or a quantity of bit positions shifted out from one cyclic shift is referred to as a cyclic shift offset or a cyclic shift offset amount of the cyclic shift, and a sequence obtained by performing cyclic shift may be referred to as a cyclic shift sequence. Therefore, by defining a new cyclic offset for the first sequence, the first sequence may be obtained by using the new cyclic offset. For example, a new list *m_{cs}* is defined to generate the first sequence, and the first request includes the first sequence.

In some embodiments, the first request is transmitted separately, or the first request reuses other uplink information (for example, a HARQ-ACK or periodic CSI).

In some embodiments, the first request is transmitted on a PUCCH or a PUSCH.

**Step 630**: Receive first information, where the first information is used to trigger at least one of the following: at least one measurement resource configuration of the interference information, at least one reporting configuration of the interference information, at least one measurement resource configuration of the joint information, or at least one reporting configuration of the joint information.

For related content of the first information, refer to step 530. Details are not described herein again.

**Step 640**: Transmit a measurement report of the interference information and/or a measurement report of the joint information.

In some embodiments, in a first time period after the UE transmits the first request, if there is no available uplink transmission resource, the UE cancels (Cancel) reporting triggered by the first information. The available uplink transmission resource may be preconfigured, or may be configured/scheduled by the network device after the first request is received. For example, the uplink transmission resource includes, for example, a PUSCH transmission resource scheduled by DCI or a configured grant (Configured Grant, CG) PUSCH transmission resource.

In some embodiments, if a transmission resource for the measurement report of the interference information or the measurement report of the joint information overlaps a transmission resource for other uplink information (for example, a transmission resource for periodic CSI reporting or HARQ-ACK reporting), the other uplink information reuses a transmission resource in a reporting configuration triggered by the first information for transmission. That is, in a case of resource overlapping/conflict, the transmission resource in the reporting configuration triggered by the first information may be used to transmit the measurement report and other information.

In some embodiments, if a transmission resource for the measurement report of the interference information or the measurement report of the joint information overlaps a transmission resource for other uplink information (for example, a transmission resource for periodic CSI reporting and HARQ-ACK reporting), a part of the other uplink information reuses a transmission resource in a reporting configuration triggered by the first information for transmission, and the other part of the other uplink information is discarded (for example, a CQI is discarded). That is, in a case of resource overlapping/conflict, the transmission resource in the reporting configuration triggered by the first information may be used to transmit the measurement report and a part of other information.

In some embodiments, if a transmission resource for the measurement report of the interference information or the measurement report of the joint information overlaps a transmission resource for other uplink information (for example, a transmission resource for periodic CSI reporting and HARQ-ACK reporting), the other uplink information is discarded. That is, in a case of resource overlap/conflict, the measurement report is preferentially transmitted, and transmission of the other uplink information is abandoned/discarded/canceled/skipped.

In some embodiments, the UE reports a specific measurement result at a granularity of a wideband or a subband, for example, at least one of the following: a cross-link interference signal strength value, an uplink reference signal power value, a signal strength indicator value of a downlink signal, or a channel quality indicator value of the downlink signal.

In some embodiments, the UE first reports indication information by using a small amount of resources, and then reports a specific value based on a preconfigured resource or another requested resource in a case that a third condition is met. For example, the UE first periodically reports cross-link interference signal strength indication information and/or uplink reference signal power indication information by using a bitmap (Bitmap), and when the third condition is met, reports a specific measurement result, for example, at least one of the following: a cross-link interference signal strength value, an uplink reference signal power value, a signal strength indicator value of a downlink signal, or a channel quality indicator value of the downlink signal.

In some embodiments, the first request may be transmitted after the UE performs CSI measurement and determines that channel quality of the UE is lower than a threshold. The first request is used to request transmission of the first information used to trigger reporting of the CSI and/or the interference information and/or the joint information.

For related content of the measurement report, refer to step 540. Details are not described herein again. Step 640 is an optional step.

In conclusion, the method provided in this embodiment of this application allows UE to determine, based on a measurement result of CSI, whether interference information needs to be measured and reported, that is, the UE is allowed to autonomously request, based on a communication status of a downlink channel, a network device to deliver a measurement resource configuration and/or a reporting configuration of the interference information, thereby improving flexibility of measurement and reporting of the interference information. Measurement and reporting of the interference information may be considered to be trigger-based, which saves measurement resources and transmission resources in a communication system, without requiring the UE to keep monitoring the interference information periodically for a long time. This achieves high efficiency and flexibility, and overheads can be reduced. In addition, the UE may report only a measurement result of the interference information, or may report a measurement result of joint information, thereby improving reporting flexibility.

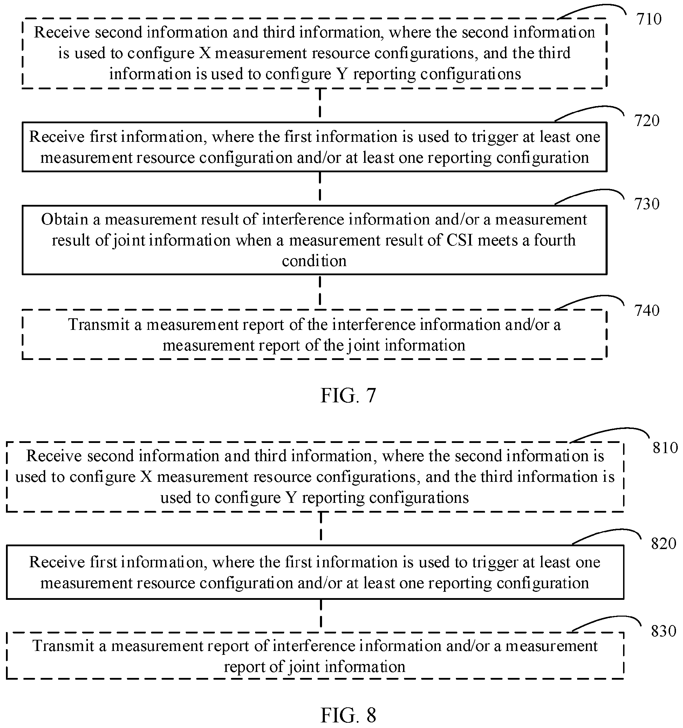

FIG. 7 is a schematic flowchart of a configuration method according to some example embodiments of this application. For example, the method is performed by UE. The UE may be implemented as the terminal device 120 and/or the terminal device 130 shown in FIG. 3. The method includes at least a part of the following steps.

**Step 710**: Receive second information and third information, where the second information is used to configure X measurement resource configurations, and the third information is used to configure Y reporting configurations.

For related content of the second information, the third information, the measurement resource configuration, and the reporting configuration, refer to step 510. Details are not described herein again.

For example, the second information in step 710 is used to configure X measurement resource configurations, including at least one of the following: a measurement resource configuration of CSI, a measurement resource configuration of interference information, or a measurement resource configuration of joint information.

Step 710 is an optional step.

**Step 720**: Receive first information, where the first information is used to trigger at least one measurement resource configuration and/or at least one reporting configuration.

In some embodiments, the first information is used to trigger at least one of the following: the measurement resource configuration of the CSI, the measurement resource configuration of the interference information, or the measurement resource configuration of the joint information. For related content of the first information, refer to step 530. Details are not described herein again.

Optionally, before receiving the first information, the UE further transmits a first request to a network device. For related content of the first request, refer to step 520 and step 620. Details are not described herein again.

**Step 730**: Obtain a measurement result of the interference information and/or a measurement result of the joint information in a case that a measurement result of the CSI meets a fourth condition.

In some embodiments, the fourth condition is configured by the network device through RRC signaling. For example, the fourth condition is configured by *reportConfigType*. For example, the network device configures *reportConfigType* for the UE as an event-triggered (Event-Trigger) measurement resource configuration and/or reporting configuration, and configures the fourth condition.

For a case in which the measurement result of the CSI meets the fourth condition, refer to step 540. Details are not described herein again.

**Step 740**: Transmit a measurement report of the interference information and/or a measurement report of the joint information.

For related content of the measurement report, refer to step 540 and step 640. Details are not described herein again. Step 740 is an optional step.

In conclusion, the method provided in this embodiment of this application allows UE to determine, based on a measurement result of CSI, whether interference information needs to be measured, that is, the UE is allowed to autonomously obtain a measurement result of the interference information based on a communication status of a downlink channel according to a measurement resource configuration. After obtaining the measurement result of the interference information, the UE may report only the measurement result of the interference information, or may report a measurement result of joint information. Measurement and reporting of the interference information are flexible. Measurement and reporting of the interference information may be considered to be trigger-based, which saves measurement resources and transmission resources in a communication system. Because the UE does not need to keep monitoring the interference information periodically for a long time, the method provided in this embodiment of this application has high efficiency and flexibility, and further has an effect of reducing overheads.

FIG. 8 is a schematic flowchart of a configuration method according to some example embodiments of this application. For example, the method is performed by UE. The UE may be implemented as the terminal device 120 and/or the terminal device 130 shown in FIG. 3. The method includes at least a part of the following steps.

**Step 810**: Receive second information and third information, where the second information is used to configure X measurement resource configurations, and the third information is used to configure Y reporting configurations.

For related content of the second information, the third information, the measurement resource configuration, and the reporting configuration, refer to step 510. Details are not described herein again.

For example, the second information in step 810 is used to configure X measurement resource configurations, including at least one of the following: a measurement resource configuration of CSI, a measurement resource configuration of interference information, or a measurement resource configuration of joint information.

Step 810 is an optional step.

**Step 820**: Receive the first information, where the first information is used to trigger at least one measurement resource configuration and/or at least one reporting configuration.

In some embodiments, the first information is used to trigger at least one of the following: the measurement resource configuration of the CSI, the measurement resource configuration of the interference information, or the measurement resource configuration of the joint information. For related content of the first information, refer to step 530. Details are not described herein again.

Optionally, before receiving the first information, the UE further transmits a first request to a network device. For related content of the first request, refer to step 520 and step 620. Details are not described herein again.

**Step 830**: Transmit a measurement report of the interference information and/or a measurement report of the joint information.

In some embodiments, the UE transmits the measurement report in a case that the measurement result of the CSI and/or the measurement result of the interference information meet/meets a second condition. For a case in which the measurement result of the CSI meets the second condition, refer to step 540 and step 640. Details are not described herein again.

In some embodiments, the second condition is configured by the network device through RRC signaling. For example, the second condition is configured by *reportConfigType*. For example, the network device configures reportConfigType for the UE as an event-triggered (Event-Trigger) measurement resource configuration and/or reporting configuration, and configures the second condition.

In conclusion, the method provided in this embodiment of this application allows UE to determine, based on a measurement result of CSI, whether interference information needs to be measured, that is, the UE is allowed to autonomously obtain a measurement result of the interference information based on a communication status of a downlink channel according to a measurement resource configuration. After obtaining the measurement result of the interference information, the UE may report only the measurement result of the interference information, or may report a measurement result of joint information. Measurement and reporting of the interference information are flexible. Measurement and reporting of the interference information may be considered to be trigger-based, which saves measurement resources and transmission resources in a communication system. Because the UE does not need to keep monitoring the interference information periodically for a long time, the method provided in this embodiment of this application has high efficiency and flexibility, and further has an effect of reducing overheads.

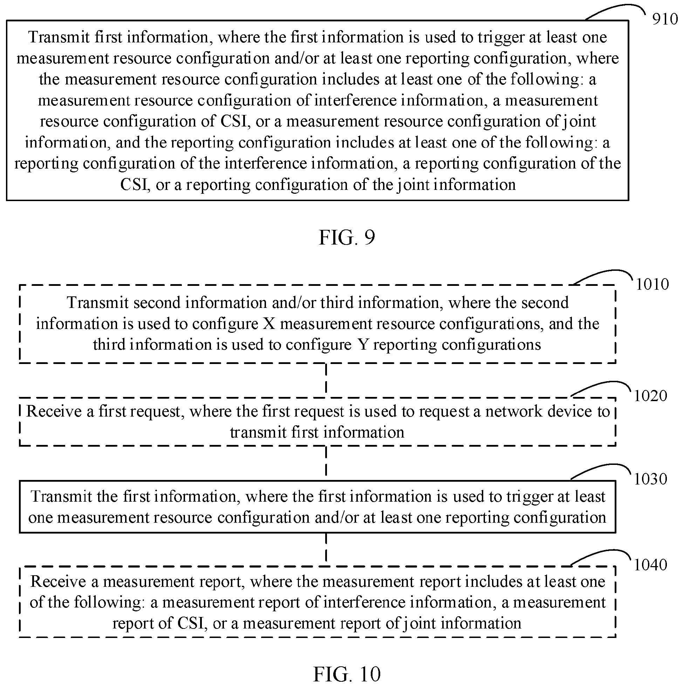

FIG. 9 is a schematic flowchart of a configuration method according to some example embodiments of this application. For example, the method is performed by a network device. The network device may be implemented as the network device 110 shown in FIG. 3. The method includes at least a part of the following steps.

**Step 910**: Transmit first information, where the first information is used to trigger at least one measurement resource configuration and/or at least one reporting configuration, where the measurement resource configuration includes at least one of the following: a measurement resource configuration of interference information, a measurement resource configuration of CSI, or a measurement resource configuration of joint information, and the reporting configuration includes at least one of the following: a reporting configuration of the interference information, a reporting configuration of the CSI, or a reporting configuration of the joint information.

The joint information refers to joint information of the interference information and the CSI. In this application, the joint information may be understood as a unified representation of the interference information and the CSI, or may be understood as information obtained through joint calculation based on the interference information and the CSI, or may be understood as a combination of the interference information and the CSI. Regardless of the understanding, the joint information is associated with both the interference information and the CSI.

In this application, the interference information indicates interference from another UE to the UE that performs step 410. For ease of description, the UE that performs step 410 is referred to as first UE, and the another UE is referred to as second UE. Optionally, the second UE is neighboring UE of the first UE, and the interference information may be understood as interference between neighboring UEs. Optional: The first UE and the second UE are located in a same cell, and the interference information may be understood as interference between UEs within the same cell. Optionally, the first UE and the second UE are located in different adjacent cells, and the interference information may be understood as interference between adjacent cells.

In some embodiments, the first UE uses an SBFD technology, or a dynamic TDD technology, or an XDD technology, or supports a first operation. The first operation refers to a technology in which data may be transmitted and received simultaneously on different subbands corresponding to a same time domain unit. For example, the first operation includes an SBFD operation (SBFD Operation) or an XDD operation (XDD Operation). It may be understood that the first operation may also be referred to as another name other than the SBFD operation and the XDD operation, for example, a new term that may be agreed upon in a future communication protocol. A specific name of the first operation is not limited in this application.

In some embodiments, a frequency domain resource corresponding to a time domain unit used by the first UE includes an uplink subband and a downlink subband, and the first UE performs downlink transmission by using the downlink subband. For example, with reference to FIG. 1, a frequency domain resource corresponding to a downlink time domain unit used by first UE includes both a downlink subband and an uplink subband.

In some embodiments, the frequency domain resource corresponding to the time domain unit used by the first UE includes a downlink wideband, and the second UE performs downlink transmission by using the downlink wideband. In other words, a frequency domain resource occupied by the downlink transmission of the first UE includes an entire wideband.

In some embodiments, a frequency domain resource corresponding to a time domain unit used by the second UE includes an uplink subband and a downlink subband, and the second UE performs uplink transmission by using the uplink subband.

In some embodiments, the frequency domain resource corresponding to the time domain unit used by the second UE includes an uplink wideband, and the second UE performs uplink transmission by using the uplink wideband. In other words, a frequency domain resource occupied by the uplink transmission of the second UE includes an entire wideband.

In some embodiments, that the UE performs downlink transmission may be understood as follows: The UE is performing downlink transmission, or the UE needs to perform downlink transmission, or the UE is about to perform downlink transmission, or the UE expects to perform downlink transmission. Optionally, that the UE performs uplink transmission may be understood as follows: The UE is performing uplink transmission, or the UE needs to perform uplink transmission, or the UE is about to perform uplink transmission, or the UE expects to perform uplink transmission.

In this application, a subband may also be referred to as a frequency subband. The uplink subband may be understood as a part of frequency domain resources in a single carrier that are used only for uplink transmission. The downlink subband may be understood as a part of frequency domain resources in a single carrier that are used only for downlink transmission.

In some embodiments, that the first information is used to trigger the at least one measurement resource configuration and/or the at least one reporting configuration may be understood as follows: the first information is used to activate the at least one measurement resource configuration and/or the at least one reporting configuration, or may be understood as follows: the first information is used to determine the at least one measurement resource configuration and/or the at least one reporting configuration, or may be understood as follows: the first information is used to indicate the at least one measurement resource configuration and/or at least one reporting configuration, or may be understood as follows: the first information is used to request the UE to perform measurement based on the at least one measurement resource configuration, and/or request the UE to perform reporting based on the at least one reporting configuration, or may be understood as follows: the first information is used to instruct the UE to perform measurement based on the at least one measurement resource configuration, and/or instruct the UE to perform reporting based on the at least one reporting configuration.

In conclusion, according to the method provided in this embodiment of this application triggering a measurement configuration and/or a reporting configuration for UE by using first information is supported, so that the UE obtains a channel state and/or interference information in a timely manner, to report the channel state and/or the interference information in a timely manner, thereby assisting a network device in learning an intra-system communication status and adjusting a scheduling policy in a timely manner. This ensures communication efficiency and reliability in a communication system.

**In some embodiments, step 910 may also be implemented as step 1030. Optionally, in addition to step 1030, the configuration method further includes at least one of the following: step 1010, step 1020, or step 1040, as shown in** **FIG. 10****.**

FIG. 10 is a schematic flowchart of a configuration method according to some example embodiments of this application. For example, the method is performed by a network device. The network device may be implemented as the network device 110 shown in FIG. 3. The method includes at least a part of the following steps.

**Step 1010**: Transmit second information and/or third information, where the second information is used to configure X measurement resource configurations, and the third information is used to configure Y reporting configurations.

Step 1010 is an optional step. For related content, refer to step 510. Details are not described herein again.

**Step 1020**: Receive a first request, where the first request is used to request the network device to transmit first information.

Step 1020 is an optional step. For related content, refer to step 520. Details are not described herein again.

**Step 1030**: Transmit the first information, where the first information is used to trigger at least one measurement resource configuration and/or at least one reporting configuration.

For related content, refer to step 530 and step 910. Details are not described herein again.

**Step 1040**: Receive a measurement report, where the measurement report includes at least one of the following: a measurement report of interference information, a measurement report of CSI, or a measurement report of joint information.

Step 1040 is an optional step. For related content, refer to step 540. Details are not described herein again.

In conclusion, according to the method provided in this embodiment of this application triggering a measurement configuration and/or a reporting configuration for UE by using first information is supported, so that the UE obtains a channel state and/or interference information in a timely manner, to report the channel state and/or the interference information in a timely manner, thereby assisting a network device in learning an intra-system communication status and adjusting a scheduling policy in a timely manner. This ensures communication efficiency and reliability in a communication system. In addition, the UE is allowed to request, based on a measurement result, a network device to transmit the first information, and the UE is further allowed to perform autonomous reporting based on the measurement result, which significantly improves flexibility of a measurement reporting process on a UE side. In this way, a measurement report reported by the UE reflects an actual communication environment in a system more accurately in a more timely manner.

The network device may perform all steps shown in FIG. 10, that is, all optional steps shown in FIG. 10 are used in combination with step 1030.

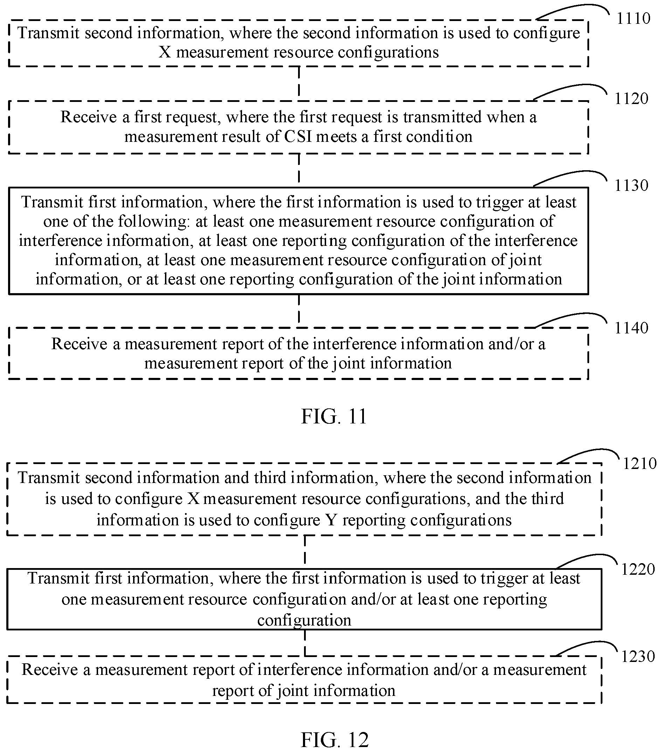

Alternatively, the network device may perform only a part of steps shown in FIG. 10. For example, the network device performs only step 1030. For another example, a part of optional steps shown in FIG. 10 are used in free combination with step 1030, to form various procedure configuration methods. FIG. 11 to FIG. 13 show three relatively typical combinations as examples, but this does not mean that configuration procedures other than embodiments shown in FIG. 11 to FIG. 13 do not fall within the protection scope of this application.

FIG. 11 is a schematic flowchart of a configuration method according to some example embodiments of this application. For example, the method is performed by a network device. The network device may be implemented as the network device 110 shown in FIG. 3. The method includes at least a part of the following steps.

**Step 1110**: Transmit second information, where the second information is used to configure X measurement resource configurations.

Step 1110 is an optional step. For related content, refer to step 510 and step 610. Details are not described herein again.

**Step 1120**: Receive a first request, where the first request is transmitted in a case that a measurement result of CSI meets a first condition.

Step 1120 is an optional step. For related content, refer to step 520 and step 620. Details are not described herein again.

**Step 1130**: Transmit first information, where the first information is used to trigger at least one of the following: at least one measurement resource configuration of interference information, at least one reporting configuration of the interference information, at least one measurement resource configuration of joint information, or at least one reporting configuration of the joint information.

For related content, refer to step 530, step 630, and step 910. Details are not described herein again.

**Step 1140**: Receive a measurement report of the interference information and/or a measurement report of the joint information.

Step 1140 is an optional step. For related content, refer to step 540 and step 640. Details are not described herein again.

In conclusion, the method provided in this embodiment of this application allows UE to determine, based on a measurement result of CSI, whether interference information needs to be measured and reported, that is, the UE is allowed to autonomously request, based on a communication status of a downlink channel, a network device to deliver a measurement resource configuration and/or a reporting configuration of the interference information, thereby improving flexibility of measurement and reporting of the interference information. Measurement and reporting of the interference information may be considered to be trigger-based, which saves measurement resources and transmission resources in a communication system, without requiring the UE to keep monitoring the interference information periodically for a long time. This achieves high efficiency and flexibility, and overheads can be reduced. In addition, the UE may report only a measurement result of the interference information, or may report a measurement result of joint information, thereby improving reporting flexibility.

FIG. 12 is a schematic flowchart of a configuration method according to some example embodiments of this application. For example, the method is performed by a network device. The network device may be implemented as the network device 110 shown in FIG. 3. The method includes at least a part of the following steps.

**Step 1210**: Transmit second information and third information, where the second information is used to configure X measurement resource configurations, and the third information is used to configure Y reporting configurations.

Step 1210 is an optional step. For related content, refer to step 510 and step 710. Details are not described herein again.

**Step 1220**: Transmit first information, where the first information is used to trigger at least one measurement resource configuration and/or at least one reporting configuration.

For related content, refer to step 530, step 720, and step 910. Details are not described herein again.

**Step 1230**: Receive a measurement report of interference information and/or a measurement report of joint information.

Step 1230 is an optional step. For related content, refer to step 540, step 640, and step 740. Details are not described herein again.

In some embodiments, the measurement result of the interference information and/or the measurement result of the joint information is obtained by UE in a case that a measurement result of CSI meets a fourth condition. For a case in which the measurement result of the CSI meets the fourth condition, refer to step 540. Details are not described herein again.

In conclusion, the method provided in this embodiment of this application allows UE to determine, based on a measurement result of CSI, whether interference information needs to be measured, that is, the UE is allowed to autonomously obtain a measurement result of the interference information based on a communication status of a downlink channel according to a measurement resource configuration. After obtaining the measurement result of the interference information, the UE may report only the measurement result of the interference information, or may report a measurement result of joint information. Measurement and reporting of the interference information are flexible. Measurement and reporting of the interference information may be considered to be trigger-based, which saves measurement resources and transmission resources in a communication system. Because the UE does not need to keep monitoring the interference information periodically for a long time, the method provided in this embodiment of this application has high efficiency and flexibility, and further has an effect of reducing overheads.

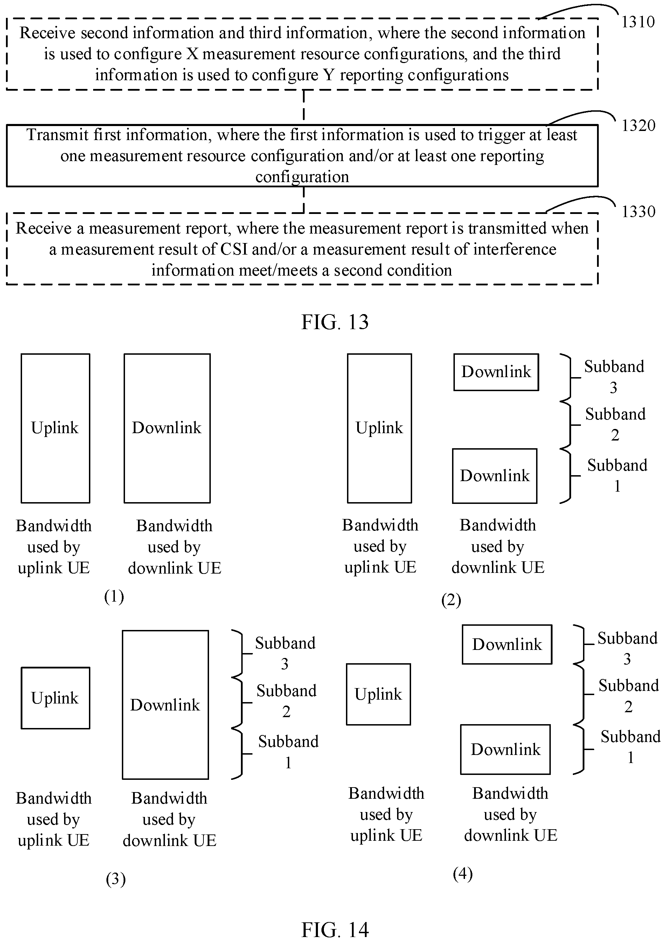

FIG. 13 is a schematic flowchart of a configuration method according to some example embodiments of this application. For example, the method is performed by a network device. The network device may be implemented as the network device 110 shown in FIG. 3. The method includes at least a part of the following steps.

**Step 1310**: Transmit second information and third information, where the second information is used to configure X measurement resource configurations, and the third information is used to configure Y reporting configurations.

Step 1310 is an optional step. For related content, refer to step 510 and step 810. Details are not described herein again.

**Step 1320**: Transmit first information, where the first information is used to trigger at least one measurement resource configuration and/or at least one reporting configuration.

For related content, refer to step 530 and step 820. Details are not described herein again.

Step 1330: Receive a measurement report, where the measurement report is transmitted in a case that a measurement result of CSI and/or a measurement result of interference information meet/meets a second condition.

The measurement report received by the network device includes: a measurement report of the interference information and/or a measurement report of joint information.

For related content, refer to step 830. Details are not described herein again.

In conclusion, the method provided in this embodiment of this application allows UE to determine, based on a measurement result of CSI, whether interference information needs to be measured, that is, the UE is allowed to autonomously obtain a measurement result of the interference information based on a communication status of a downlink channel according to a measurement resource configuration. After obtaining the measurement result of the interference information, the UE may report only the measurement result of the interference information, or may report a measurement result of joint information. Measurement and reporting of the interference information are flexible. Measurement and reporting of the interference information may be considered to be trigger-based, which saves measurement resources and transmission resources in a communication system. Because the UE does not need to keep monitoring the interference information periodically for a long time, the method provided in this embodiment of this application has high efficiency and flexibility, and further has an effect of reducing overheads.

**Next, how to use the methods provided in the foregoing embodiments in different interference environments is further described.** Using an example in which the network device triggers a periodic measurement resource configuration and a periodic reporting configuration, the following separately describes, with reference to four interference scenarios shown in FIG. 14, how to perform measurement and reporting in different interference scenarios. For example, the network device sets, by using RRC signaling, a CSI-MeasConfig IE to set both resourceType (resource type) and reportConfigType (reporting configuration type) to periodically measure and report CSI/interference information. It should be noted that in FIG. 14, an example in which one bandwidth is divided into three subbands is used for illustration. Actually, it is completely possible to divide the bandwidth into another quantity of subbands, and the bandwidth may be evenly divided, or may be unevenly divided. FIG. 14 is merely used as an example rather than a limitation.

In (1) in FIG. 14, a downlink frequency domain resource completely overlaps an uplink frequency domain resource. In (2), (3), and (4) in FIG. 14, a downlink frequency domain resource does not completely overlap an uplink frequency domain resource. In a case of incomplete overlapping, there may be the following three characteristics: (1) Division of downlink subbands and uplink subbands may be uneven, that is, quantities of RBs occupied by a subband 1, a subband 2, and a subband 3 in the figure may be different. (2) A CSI-RS is transmitted only in a downlink frequency domain resource, and measurement performed by a downlink UE based on a CSI-RS is performed only in a downlink frequency-domain resource. (3) An uplink reference signal is transmitted only in an uplink frequency domain resource, and measurement performed by the downlink UE based on the uplink reference signal is performed only in an overlapping range of the downlink frequency domain resource and the uplink frequency domain resource.

### (1) Interference scenario in which a downlink frequency-domain resource completely overlaps an uplink frequency-domain resource

In an interference scenario shown in (1) in FIG. 14, the downlink frequency domain resource completely overlaps the uplink frequency domain resource. Based on the fifth threshold preconfigured by the network device, the UE only needs to periodically occupy one bit on a PUCCH to indicate, or indicate, by using a sequence, whether the cross-link interference signal strength value is greater than the fifth threshold.

If the cross-link interference signal strength value is less than the fifth threshold, the UE transmits the first indication information. For example, the first indication information sets the bit occupied on the PUCCH to a first value (for example, 0 or 1) to indicate that the cross-link interference signal strength value is less than the fifth threshold. For another example, the first indication information uses a sequence A₁ to indicate that the cross-link interference signal strength value is less than the fifth threshold. For another example, a sequence B₁ is generated based on cyclic shift indication information, and the first indication information uses the sequence B₁ to indicate that the cross-link interference signal strength value is less than the fifth threshold.

Once the UE determines through measurement that the cross-link interference signal strength value is greater than the fifth threshold, the UE transmits the second indication information. For example, the second indication information sets the bit occupied on the PUCCH to a second value (for example, 1 or 0, where the second value is different from the first value) to indicate that the cross-link interference signal strength value is greater than the fifth threshold. For another example, the second indication information uses a sequence A₂ to indicate that the cross-link interference signal strength value is greater than the fifth threshold. For another example, a sequence B₂ is generated based on cyclic shift indication information, and the second indication information uses the sequence B₂ to indicate that the cross-link interference signal strength value is greater than the fifth threshold.

Optionally, both the measurement resource configuration and the reporting configuration of the interference information are configured at a granularity of a wideband.

Optionally, the measurement resource configuration and/or the reporting configuration of the interference information are/is configured at a granularity of a subband. In this case, subbands may be evenly divided, that is, different subbands occupy a same quantity of RBs. If the reporting configuration of the interference information is configured at a granularity of a subband, the UE may indicate interference signal strength of each subband in a bitmap form based on the fifth threshold preconfigured by the network device, that is, report a measurement result of interference information of each subband in a bitmap form.

In some embodiments, the second indication information is further used to notify the network device that the UE is to report a specific measurement result in a next PUCCH transmission opportunity, or the UE is to report a specific measurement result by using more resources in a next PUCCH transmission opportunity. The specific measurement result includes, for example, a cross-link interference signal strength value and/or an uplink reference signal power value. For example, a resource and a reporting rule used to report a specific measurement result by the UE have been preconfigured by the network device or agreed upon in a communication protocol.

In some embodiments, the UE further transmits a second request at the same time when transmitting the second indication information. The second request is used to request the network device to schedule more PUSCH resources for the UE, so that the UE transmits the cross-link interference signal strength value and/or the uplink reference signal power in a next uplink transmission.

### (2) Interference scenario in which a downlink frequency domain resource does not completely overlap an uplink frequency domain resource and the uplink frequency domain resource completely covers the downlink frequency domain resource

### Measurement and reporting of CSI in an interference scenario shown in (2) in FIG. 14:

1. Measurement and reporting of the CSI may be performed based on transmission of a CSI-RS signal. For example, an RSRP value is calculated at a granularity of a wideband, to indicate an overall received signal power of a downlink frequency domain resource. For another example, RSRP values of two downlink subbands are separately calculated at a granularity of a subband, to indicate respective received signal powers of the two downlink subbands.
2. Measurement and reporting of the CSI may be performed based on a CSI-IM resource. That is, no downlink signal is transmitted in a downlink frequency domain resource, and the UE calculates RSSIs of an interference signal and noise in the downlink frequency domain resource on which no downlink transmission is performed. Alternatively, the UE calculates RSSIs of an interference signal and noise in a downlink frequency domain resource on which no downlink transmission is performed, and calculates an SINR in combination with RSRP obtained through measurement based on a CSI-RS resource. Alternatively, the UE calculates RSSIs of an interference signal and noise in a downlink frequency domain resource on which no downlink transmission is performed, and calculates a CQI in combination with RSRP obtained through measurement based on a CSI-RS resource. The RSSI, the RSRP, the SINR, and the CQI may be calculated at a granularity of a wideband, or may be calculated at a granularity of a subband, which is not limited.

### Measurement and reporting of interference information in an interference scenario shown in (2) in FIG. 14:

Considering that an RSRP of an interference signal can truly reflect a cross-link interference degree only when the RSRP of the interference signal is measured in a downlink frequency domain resource, an implementation is as follows: a measurement resource for an uplink reference signal may be defined only in a downlink frequency domain resource of the downlink UE. If the interference signal is, for example, an SRS, a measurement resource for the SRS may be defined only in a downlink subband 1 and a downlink subband 3 occupied by the downlink UE. The UE measures RSRPs of the SRS in the subband 1 and the subband 3. In addition, the UE may calculate an RSRP value at a granularity of a wideband to indicate an overall cross-link interference degree of the downlink frequency domain resource, or may separately calculate SRS-RSRP values corresponding to two downlink subbands at a granularity of a subband, to indicate cross-link interference degrees of the two downlink subbands.

In another implementation, it is considered that RSRP of an interference signal measured on the subband 2 may also reflect the cross-link interference degree to some extent, an uplink UE interfering with the downlink UE can also be identified, and an SRS measurement resource does not need to be deducted from the downlink frequency domain resource for measurement and calculation. Therefore, this implementation can improve measurement efficiency and downlink transmission efficiency. Therefore, the SRS measurement resource may be defined only on the subband 2, and the UE performs SRS measurement on the subband 2 to obtain a measurement result of the interference information.

A further implementation is as follows: performing measurement and reporting in a bandwidth resource of the downlink UE based on a bandwidth resource configuration of the uplink UE. For example, configurations such as a CSI-IM measurement resource and a CSI-IM reporting configuration are used to measure and report interference information at a granularity of a wideband or a subband.

### (3) Interference scenario in which a downlink frequency domain resource does not completely overlap an uplink frequency domain resource and the downlink frequency domain resource completely covers the uplink frequency domain resource

In an interference scenario shown in (3) in FIG. 14, CSI of the UE may be measured and reported at a granularity of a wideband or a subband based on a full-bandwidth resource configuration. That is, the UE performs CSI measurement on an entire downlink frequency band at a granularity of a wideband or a subband, and reports CSI at a granularity of a wideband a subband.

Regarding reporting of the interference information of the UE, because an overlapping resource of the uplink and downlink UEs is only the subband 2, an SRS resource may be configured only in the subband 2, so that the UE can obtain a measurement result of the interference information on the subband 2.

Considering uncertainty of an uplink subband resource configuration, impact of an uplink subband on each part of the downlink bandwidth is different. Therefore, for the interference scenario shown in (3) in FIG. 14, reporting at a granularity of subband is preferentially selected, so that the UE and the network device can determine which downlink subbands have poor transmission quality and which uplink subbands have relatively high interference to donwlink subbands, thereby accurately adjusting a scheduling policy.

### (4) A downlink frequency domain resource does not overlap an uplink frequency domain resource

In an interference scenario shown in (4) in FIG. 14, for measurement and reporting of CSI of the UE, refer to the manner provided in (2) in FIG. 14.

However, for measurement and reporting of interference information, because the uplink and downlink UEs do not have an overlapping resource, even if SRS measurement is performed on the subband 2, a cross-link interference degree of the uplink and downlink UEs cannot be truly reflected. Only a user that may have strong interference can be identified by using this measurement. Therefore, in the interference scenario shown in (4) in FIG. 14, a measurement result of the interference information that can be obtained by the UE is at most used to enable the UE and the network device to learn that cross-link interference currently exists, but it is difficult to determine how strong a specific interference degree is, and cross-link interference on which subbands are relatively severe.

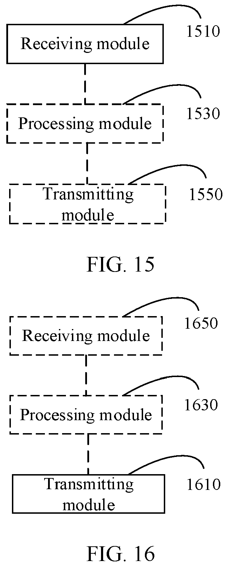

FIG. 15 is a structural block diagram of a configuration apparatus according to an example embodiment of this application. The apparatus may be implemented as the terminal device shown in FIG. 3, FIG. 4, FIG. 5, FIG. 6, FIG. 7, or FIG. 8, or is implemented as a part of the terminal device shown in FIG. 3, FIG. 4, FIG. 5, FIG. 6, FIG. 7, or FIG. 8. The apparatus includes a receiving module 1510. Optionally, the apparatus further includes a processing module 1530 and/or a transmitting module 1550.

The receiving module 1510 is configured to receive first information, where the first information is used to trigger at least one measurement resource configuration and/or at least one reporting configuration, where the measurement resource configuration includes at least one of the following: a measurement resource configuration of interference information, a measurement resource configuration of channel state information CSI, or a measurement resource configuration of joint information; the reporting configuration includes at least one of the following: a reporting configuration of the interference information, a reporting configuration of the CSI, or a reporting configuration of the joint information; and the joint information is joint information of the interference information and the CSI.

In some embodiments, the first information meets at least one of the following: in a case that the first information indicates a first state, the first information is used to trigger at least one measurement resource configuration of the interference information and/or at least one reporting configuration of the interference information; in a case that the first information indicates a second state, the first information is used to trigger at least one measurement resource configuration of the CSI and/or at least one reporting configuration of the CSI; or in a case that the first information indicates a third state, the first information is used to trigger at least one measurement resource configuration of joint information and/or at least one reporting configuration of the joint information.

In some embodiments, the receiving module 1510 is further configured to: receive second information and/or third information, where the second information is used to configure X measurement resource configurations, the at least one measurement resource configuration is one or more of the X measurement resource configurations, and X is an integer greater than or equal to 1; and the third information is used to configure Y reporting configurations, the at least one reporting configuration is one or more of the Y reporting configurations, and Y is an integer greater than or equal to 1.

In some embodiments, the first information includes the at least one measurement resource configuration and/or the at least one reporting configuration.

In some embodiments, the apparatus further includes the processing module 1530, configured to perform measurement based on the at least one measurement resource configuration.

In some embodiments, the apparatus further includes the transmitting module 1550, configured to transmit a first request, where the first request is used to request a network device to transmit the first information.

In some embodiments, the transmitting module 1550 is configured to transmit the first request in a case that a measurement result of the CSI meets a first condition.

In some embodiments, a case in which the measurement result of the CSI meets the first condition includes: a downlink signal measurement result is less than a first threshold, or the downlink signal measurement result is equal to the first threshold.

In some embodiments, the transmitting module 1550 is configured to transmit a measurement report, where the measurement report includes at least one of the following: a measurement report of the interference information, a measurement report of the CSI, or a measurement report of the joint information.

In some embodiments, the measurement report is obtained through measurement based on the at least one measurement resource configuration, and is transmitted based on the at least one reporting configuration.

In some embodiments, the transmitting module 1550 is configured to transmit the measurement report in a case that a measurement result meets a second condition, where the measurement result includes the measurement result of the CSI and/or a measurement result of the interference information.

In some embodiments, a case in which the measurement result of the CSI meets the second condition includes at least one of the following: the downlink signal measurement result is less than a second threshold; the downlink signal measurement result is equal to the second threshold; an uplink signal measurement result is greater than a third threshold; or the uplink signal measurement result is equal to the third threshold.

In some embodiments, a case in which the measurement result of the interference information meets the second condition includes at least one of the following: cross-link interference signal strength is greater than a fourth threshold; the cross-link interference signal strength is equal to the fourth threshold; an uplink signal measurement result is greater than a third threshold; or the uplink signal measurement result is equal to the third threshold.

In some embodiments, the measurement report of the interference information includes the measurement result of the interference information, and the measurement result of the interference information includes at least one of the following: a cross-link interference signal strength value, an uplink reference signal power value, or indication information, where the indication information is used to indicate whether the cross-link interference signal strength value is less than a fifth threshold, and/or whether the uplink reference signal power value is less than a sixth threshold.

In some embodiments, the transmitting module 1550 is configured to: periodically transmit first indication information, where the first indication information is used to indicate that the cross-link interference signal strength value is less than the fifth threshold, and/or the uplink reference signal power value is less than the sixth threshold; and transmit the cross-link interference signal strength value and/or the uplink reference signal power value in a case that a third condition is met.

In some embodiments, the transmitting module 1550 is configured to: transmit second indication information, where the second indication information is used to indicate at least one of the following: the cross-link interference signal strength value is greater than the fifth threshold, the cross-link interference signal strength value is equal to the fifth threshold, the uplink reference signal power value is greater than the sixth threshold, or the uplink reference signal power value is equal to the sixth threshold.

In some embodiments, a case in which the third condition is met includes at least one of the following: the cross-link interference signal strength value is greater than the fifth threshold, the cross-link interference signal strength value is equal to the fifth threshold, the uplink reference signal power value is greater than the sixth threshold, or the uplink reference signal power value is equal to the sixth threshold.

In some embodiments, the second indication information is further used to indicate that the apparatus is to transmit the cross-link interference signal strength value and/or the uplink reference signal power value in a next uplink transmission.

In some embodiments, the second indication information is further used to request the network device to schedule the apparatus to transmit the cross-link interference signal strength value and/or the uplink reference signal power value in a next uplink transmission.

In some embodiments, the measurement report of the interference information is obtained through measurement in a downlink frequency band used by the apparatus, or is obtained through measurement in a subband not used by the apparatus.

In some embodiments, the measurement report of the interference information is obtained through measurement in a downlink frequency band used by the apparatus, and there is no downlink transmission in at least a part of frequency domain resources in the downlink frequency band.

In some embodiments, the measurement report of the CSI includes the measurement result of the CSI, and the measurement result of the CSI includes at least one of the following: a downlink signal measurement result or an uplink signal measurement result.

In some embodiments, the measurement report of the joint information includes a measurement result of the joint information, and the measurement result of the joint information is obtained based on the reporting configuration of the joint information, or obtained based on the reporting configuration of the interference information and the reporting configuration of the CSI.

In some embodiments, the measurement result of the joint information includes a first SINR, and the first SINR is obtained based on the measurement resource configuration of the interference information and the measurement resource configuration of the CSI; or the measurement result of the joint information includes a concatenation result of the measurement result of the CSI and the measurement result of the interference information.

In some embodiments, the processing module 1530 is configured to: obtain the measurement result of the interference information in a case that the measurement result of the CSI meets a fourth condition.

In some embodiments, a case in which the measurement result of the CSI meets the fourth condition includes at least one of the following: the downlink signal measurement result is less than a seventh threshold; the downlink signal measurement result is equal to the seventh threshold; the uplink signal measurement result is greater than an eighth threshold; or the uplink signal measurement result is equal to the eighth threshold.

In some embodiments, the downlink signal measurement result includes at least one of the following: a signal strength indicator value of a downlink signal, a channel quality indicator value of the downlink signal, or a second SINR of the downlink signal, where the second SINR is obtained based on the measurement resource configuration of the CSI.

In some embodiments, the uplink signal measurement result includes: SRS signal received power.

In some embodiments, the measurement resource configuration of the interference information includes at least one interference information measurement resource set, and each set of the at least one interference information measurement resource set includes: at least one first measurement resource and/or at least one second measurement resource, where the first measurement resource is used to obtain cross-link interference signal strength indication information and/or a cross-link interference signal strength value, and the second measurement resource is used to obtain uplink reference signal power indication information and/or an uplink reference signal power value.

In some embodiments, the measurement resource configuration of the CSI includes at least one CSI measurement resource set and/or at least one SRS measurement resource set; and each CSI measurement resource set of the at least one CSI measurement resource set includes at least one CSI-RS measurement resource and/or at least one CSI-IM measurement resource, and each SRS measurement resource set of the at least one SRS measurement resource set includes at least one SRS measurement resource.

In some embodiments, the measurement resource configuration of the joint information includes at least one joint information measurement resource set, and each joint information measurement resource set of the at least one joint information measurement resource set includes at least one of the following: at least one first measurement resource, at least one second measurement resource, at least one CSI-RS measurement resource, at least one CSI-IM measurement resource, or at least one SRS measurement resource, where the first measurement resource is used to obtain cross-link interference signal strength indication information and/or a cross-link interference signal strength value, and the second measurement resource is used to obtain uplink reference signal power indication information and/or an uplink reference signal power value.

In some embodiments, the measurement resource configuration is used to configure a periodic time domain resource, a semi-persistent time domain resource, or an aperiodic time domain resource.

In some embodiments, the measurement resource configuration configures a frequency domain resource at a granularity of a wideband, or configures a frequency domain resource at a granularity of a subband.

In some embodiments, the measurement resource configuration is used to configure one or more subbands, and different subbands include same or different quantities of RBs.

In some embodiments, the reporting configuration is used to indicate periodic reporting, semi-persistent reporting, aperiodic reporting, or trigger-based reporting.

In some embodiments, the reporting configuration is used to indicate reporting at a granularity of a wideband, or reporting at a granularity of a subband.

In some embodiments, in a case that the measurement resource configuration configures a frequency domain resource at a granularity of a wideband, the reporting configuration is used to indicate reporting at a granularity of a wideband or a subband; or in a case that the measurement resource configuration configures a frequency domain resource at a granularity of a subband, the reporting configuration is used to indicate reporting at a granularity of a subband.

In some embodiments, the reporting configuration of the interference information is associated with one or more measurement resource configurations of the interference information, the CSI reporting configuration is associated with one or more measurement resource configurations of the CSI, and the reporting configuration of the joint information is associated with one or more measurement resource configurations of the joint information.

In some embodiments, the receiving module 1510 is configured to perform one or more of the following steps: step 410, step 510, step 530, step 610, step 630, step 710, step 720, step 810, or step 820.

In some embodiments, the transmitting module 1550 is configured to perform one or more of the following steps: step 520, step 540, step 620, step 640, step 740, or step 830.

In some embodiments, the processing module 1530 is configured to perform the following step: step 730.

In some embodiments, the processing module 1530 is configured to perform one or more of the following operations: CSI measurement, interference information measurement, SRS measurement, joint information measurement, determining whether the first condition is met, determining whether the second condition is met, determining whether the third condition is met, or determining whether the fourth condition is met.

In conclusion, according to the apparatus provided in this embodiment of this application triggering a measurement configuration and/or a reporting configuration for UE by using first information is supported, so that the UE obtains a channel state and/or interference information in a timely manner, to report the channel state and/or the interference information in a timely manner, thereby assisting a network device in learning an intra-system communication status and adjusting a scheduling policy in a timely manner. This ensures communication efficiency and reliability in a communication system. In addition, the UE is allowed to request, based on a measurement result, a network device to transmit the first information, and the UE is further allowed to perform autonomous reporting based on the measurement result, which significantly improves flexibility of a measurement reporting process on a UE side. In this way, a measurement report reported by the UE reflects an actual communication environment in a system more accurately in a more timely manner.

FIG. 16 is a structural block diagram of a configuration apparatus according to an example embodiment of this application. The apparatus may be implemented as the network device shown in FIG. 3, FIG. 9, FIG. 10, FIG. 11, FIG. 12, or FIG. 13, or is implemented as a part of the network device shown in FIG. 3, FIG. 9, FIG. 10, FIG. 11, FIG. 12, or FIG. 13. The apparatus includes a transmitting module 1610. Optionally, the apparatus further includes a processing module 1630 and/or a receiving module 1650.

The transmitting module 1610 is configured to transmit first information, where the first information is used to trigger at least one measurement resource configuration and/or at least one reporting configuration, where the measurement resource configuration includes at least one of the following: a measurement resource configuration of interference information, a measurement resource configuration of channel state information CSI, or a measurement resource configuration of joint information; the reporting configuration includes at least one of the following: a reporting configuration of the interference information, a reporting configuration of the CSI, or a reporting configuration of the joint information; and the joint information is joint information of the interference information and the CSI.

In some embodiments, the first information meets at least one of the following: in a case that the first information indicates a first state, the first information is used to trigger at least one measurement resource configuration of the interference information and/or at least one reporting configuration of the interference information; in a case that the first information indicates a second state, the first information is used to trigger at least one measurement resource configuration of the CSI and/or at least one reporting configuration of the CSI; or in a case that the first information indicates a third state, the first information is used to trigger at least one measurement resource configuration of joint information and/or at least one reporting configuration of the joint information.

In some embodiments, the transmitting module 1610 is further configured to: transmit second information and/or third information, where the second information is used to configure X measurement resource configurations, the at least one measurement resource configuration is one or more of the X measurement resource configurations, and X is an integer greater than or equal to 1; and the third information is used to configure Y reporting configurations, the at least one reporting configuration is one or more of the Y reporting configurations, and Y is an integer greater than or equal to 1.

In some embodiments, the first information includes the at least one measurement resource configuration and/or the at least one reporting configuration.

In some embodiments, the apparatus further includes the processing module 1630, configured to determine whether to transmit the first information.

In some embodiments, the apparatus further includes the receiving module 1650, configured to receive a first request, where the first request is used to request the apparatus to transmit the first information.

In some embodiments, the first request is transmitted in a case that a measurement result of the CSI meets a first condition.

In some embodiments, a case in which the measurement result of the CSI meets the first condition includes: a downlink signal measurement result is less than a first threshold, or the downlink signal measurement result is equal to the first threshold.

In some embodiments, the receiving module 1650 is configured to receive a measurement report, where the measurement report includes at least one of the following: a measurement report of the interference information, a measurement report of the CSI, or a measurement report of the joint information.

In some embodiments, the measurement report is obtained through measurement based on the at least one measurement resource configuration, and is transmitted based on the at least one reporting configuration.

In some embodiments, the measurement report is transmitted in a case that a measurement result meets a second condition, where the measurement result includes the measurement result of the CSI and/or a measurement result of the interference information.

In some embodiments, a case in which the measurement result of the CSI meets the second condition includes at least one of the following: the downlink signal measurement result is less than a second threshold; the downlink signal measurement result is equal to the second threshold; an uplink signal measurement result is greater than a third threshold; or the uplink signal measurement result is equal to the third threshold.

In some embodiments, a case in which the measurement result of the interference information meets the second condition includes at least one of the following: cross-link interference signal strength is greater than a fourth threshold; the cross-link interference signal strength is equal to the fourth threshold; an uplink signal measurement result is greater than a third threshold; or the uplink signal measurement result is equal to the third threshold.

In some embodiments, the measurement report of the interference information includes the measurement result of the interference information, and the measurement result of the interference information includes at least one of the following: a cross-link interference signal strength value, an uplink reference signal power value, or indication information, where the indication information is used to indicate whether the cross-link interference signal strength value is less than a fifth threshold, and/or whether the uplink reference signal power value is less than a sixth threshold.

In some embodiments, the receiving module 1650 is configured to: periodically receive first indication information, where the first indication information is used to indicate that the cross-link interference signal strength value is less than the fifth threshold, and/or the uplink reference signal power value is less than the sixth threshold; and receive the cross-link interference signal strength value and/or the uplink reference signal power value, where the cross-link interference signal strength value and/or the uplink reference signal power value are/is transmitted in a case that a third condition is met.

In some embodiments, the receiving module 1650 is configured to receive second indication information, where the second indication information is used to indicate at least one of the following: the cross-link interference signal strength value is greater than the fifth threshold, the cross-link interference signal strength value is equal to the fifth threshold, the uplink reference signal power value is greater than the sixth threshold, or the uplink reference signal power value is equal to the sixth threshold.

In some embodiments, a case in which the third condition is met includes at least one of the following: the cross-link interference signal strength value is greater than the fifth threshold, the cross-link interference signal strength value is equal to the fifth threshold, the uplink reference signal power value is greater than the sixth threshold, or the uplink reference signal power value is equal to the sixth threshold.

In some embodiments, the second indication information is further used to indicate that a terminal device is to transmit the cross-link interference signal strength value and/or the uplink reference signal power value in a next uplink transmission.

In some embodiments, the second indication information is further used to request the apparatus to schedule a terminal device to transmit the cross-link interference signal strength value and/or the uplink reference signal power value in a next uplink transmission.

In some embodiments, the measurement report of the interference information is obtained through measurement in a downlink frequency band used by the terminal device, or is obtained through measurement in a subband not used by the terminal device.

In some embodiments, the measurement report of the interference information is obtained through measurement in a downlink frequency band used by the terminal device, and there is no downlink transmission in at least a part of frequency domain resources in the downlink frequency band.

In some embodiments, the measurement report of the CSI includes the measurement result of the CSI, and the measurement result of the CSI includes at least one of the following: a downlink signal measurement result or an uplink signal measurement result.

In some embodiments, the measurement report of the joint information includes a measurement result of the joint information, and the measurement result of the joint information is obtained based on the reporting configuration of the joint information, or obtained based on the reporting configuration of the interference information and the reporting configuration of the CSI.

In some embodiments, the measurement result of the joint information includes a first SINR, and the first SINR is obtained based on the measurement resource configuration of the interference information and the measurement resource configuration of the CSI; or the measurement result of the joint information includes a concatenation result of the measurement result of the CSI and the measurement result of the interference information.

In some embodiments, the measurement result of the interference information is obtained in a case that the measurement result of the CSI meets a fourth condition.

In some embodiments, a case in which the measurement result of the CSI meets the fourth condition includes at least one of the following: the downlink signal measurement result is less than a seventh threshold; the downlink signal measurement result is equal to the seventh threshold; the uplink signal measurement result is greater than an eighth threshold; or the uplink signal measurement result is equal to the eighth threshold.

In some embodiments, the downlink signal measurement result includes at least one of the following: a signal strength indicator value of a downlink signal, a channel quality indicator value of the downlink signal, or a second SINR of the downlink signal, where the second SINR is obtained based on the measurement resource configuration of the CSI.

In some embodiments, the uplink signal measurement result includes: SRS signal received power.

In some embodiments, the measurement resource configuration of the interference information includes at least one interference information measurement resource set, and each set of the at least one interference information measurement resource set includes: at least one first measurement resource and/or at least one second measurement resource, where the first measurement resource is used to obtain cross-link interference signal strength indication information and/or a cross-link interference signal strength value, and the second measurement resource is used to obtain uplink reference signal power indication information and/or an uplink reference signal power value.

In some embodiments, the measurement resource configuration of the CSI includes at least one CSI measurement resource set and/or at least one SRS measurement resource set; and each CSI measurement resource set of the at least one CSI measurement resource set includes at least one CSI-RS measurement resource and/or at least one CSI-IM measurement resource, and each SRS measurement resource set of the at least one SRS measurement resource set includes at least one SRS measurement resource.

In some embodiments, the measurement resource configuration of the joint information includes at least one joint information measurement resource set, and each joint information measurement resource set of the at least one joint information measurement resource set includes at least one of the following: at least one first measurement resource, at least one second measurement resource, at least one CSI-RS measurement resource, at least one CSI-IM measurement resource, or at least one SRS measurement resource, where the first measurement resource is used to obtain cross-link interference signal strength indication information and/or a cross-link interference signal strength value, and the second measurement resource is used to obtain uplink reference signal power indication information and/or an uplink reference signal power value.

In some embodiments, the measurement resource configuration is used to configure a periodic time domain resource, a semi-persistent time domain resource, or an aperiodic time domain resource.

In some embodiments, the measurement resource configuration configures a frequency domain resource at a granularity of a wideband, or configures a frequency domain resource at a granularity of a subband.

In some embodiments, the measurement resource configuration is used to configure one or more subbands, and different subbands include same or different quantities of RBs.

In some embodiments, the reporting configuration is used to indicate periodic reporting, semi-persistent reporting, aperiodic reporting, or trigger-based reporting.

In some embodiments, the reporting configuration is used to indicate reporting at a granularity of a wideband, or reporting at a granularity of a subband.

In some embodiments, in a case that the measurement resource configuration configures a frequency domain resource at a granularity of a wideband, the reporting configuration is used to indicate reporting at a granularity of a wideband or a subband; or in a case that the measurement resource configuration configures a frequency domain resource at a granularity of a subband, the reporting configuration is used to indicate reporting at a granularity of a subband.

In some embodiments, the reporting configuration of the interference information is associated with one or more measurement resource configurations of the interference information, the CSI reporting configuration is associated with one or more measurement resource configurations of the CSI, and the reporting configuration of the joint information is associated with one or more measurement resource configurations of the joint information.

In some embodiments, the transmitting module 1610 is configured to perform one or more of the following steps: step 910, step 1010, step 1030, step 1110, step 1130, step 1210, step 1220, step 1310, or step 1320.

In some embodiments, the receiving module 1650 is configured to perform one or more of the following steps: step 1020, step 1040, step 1120, step 1140, step 1230, or step 1330.

In some embodiments, the processing module 1630 is configured to perform one or more of the following operations: determining the measurement result of the CSI, determining the measurement result of the interference information, determining a measurement result of an SRS, determining the measurement result of the joint information, determining whether to transmit the first information, or adjusting a scheduling policy.

In conclusion, according to the apparatus provided in this embodiment of this application triggering a measurement configuration and/or a reporting configuration for UE by using first information is supported, so that the UE obtains a channel state and/or interference information in a timely manner, to report the channel state and/or the interference information in a timely manner, thereby assisting a network device in learning an intra-system communication status and adjusting a scheduling policy in a timely manner. This ensures communication efficiency and reliability in a communication system. In addition, the UE is allowed to request, based on a measurement result, a network device to transmit the first information, and the UE is further allowed to perform autonomous reporting based on the measurement result, which significantly improves flexibility of a measurement reporting process on a UE side. In this way, a measurement report reported by the UE reflects an actual communication environment in a system more accurately in a more timely manner.

It should be noted that division of the apparatus provided in the foregoing embodiment into the foregoing functional modules is merely used as an example for description. In actual application, the foregoing functions may be allocated to different functional modules for implementation based on a requirement, that is, an internal structure of the appartus is divided into different functional modules, to complete all or a part of the functions described above.

For the apparatus in this embodiment, a specific manner in which each module performs operations has been described in detail in the method embodiment and is not elaborated herein.

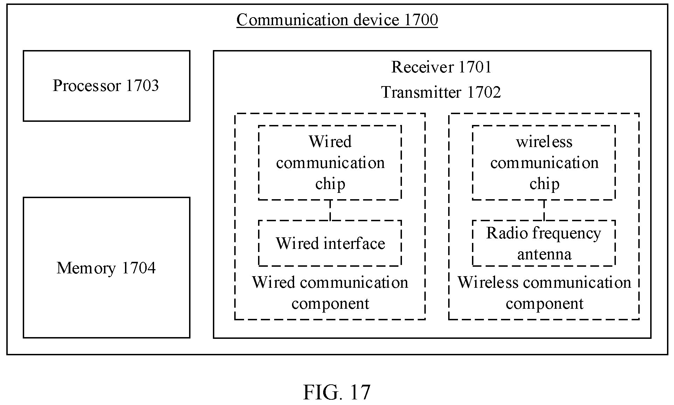

FIG. 17 is a schematic structural diagram of a communication device 1700 according to some example embodiments of this application. The communication device 1700 may also be implemented as the network device described above. The communication device 1700 is at least one of the following: a receiver 1701, a transmitter 1702, a processor 1703, a memory 1704, or a bus (not shown in the figure).

Optionally, the communication device 1700 may be implemented as the terminal device described above. Optionally, the communication device 1700 performs a part or all of the steps performed by the terminal device.

Optionally, the communication device 1700 may be implemented as the network device described above. Optionally, the communication device 1700 performs a part or all of the steps performed by the network device.

The receiver 1701 is configured to implement a receiving function, and the transmitter 1702 is configured to implement a transmitting function.

In some embodiments, the receiver 1701 may be configured to implement functions and steps of the receiving module 1510 and/or the receiving module 1650, and the transmitter 1702 may be configured to implement functions and steps of the transmitting module 1550 and/or the transmitting module 1610.

Optionally, the receiver 1701 and the transmitter 1702 may be implemented as one communication component, the communication component may be a communication chip, and the communication component may be referred to as a transceiver. Optionally, the receiver 1701 and the transmitter 1702 may be implemented as a wireless communication component and/or a wired communication component. Optionally, the wireless communication component includes a wireless communication chip and/or a radio frequency antenna. Optionally, the wired communication component includes a wired communication chip and/or a wired interface.

The processor 1703 includes one or more processing cores. The processor 1703 executes various function applications and information processing by running a software program and a module. In some embodiments, the processor 1703 may be configured to implement functions and steps of the processing module 1530 and/or the processing module 1630. The memory 1704 may be configured to store a computer program executed by the processor 1703, and the processor 1703 is configured to execute the computer program, to implement the steps in the foregoing method embodiments.

In some embodiments, the memory 1704 may be connected to the processor 1703, the receiver 1701, and the transmitter 1702.

In addition, the memory 1704 may be implemented by any type of volatile or non-volatile storage device or a combination thereof. The volatile or non-volatile storage device includes but is not limited to: disk or optical disc, electrically erasable programmable read-only memory (Electrically Erasable Programmable Read Only Memory, EEPROM), erasable programmable read-only memory (Erasable Programmable Read-Only Memory, EPROM), static random access memory (Static Random-Access Memory, SRAM), read-only memory (Read-Only Memory, ROM), magnetic memory, flash memory, programmable read-only memory (Programmable Read-Only Memory, PROM).

In some embodiments, the receiver 1701 receives a signal/data independently, or the processor 1703 controls the receiver 1701 to receive a signal/data, or the processor 1703 requests the receiver 1701 to receive a signal/data, or the processor 1703 cooperates with the receiver 1701 to receive a signal/data.

In some embodiments, the transmitter 1702 transmits a signal/data independently, or the processor 1703 controls the transmitter 1702 to transmit a signal/data, or the processor 1703 requests the transmitter 1702 to transmit a signal/data, or the processor 1703 cooperates with the transmitter 1702 to transmit a signal/data.

For details not described in detail in this embodiment, reference may be made to the foregoing embodiments, and details are not described herein again.

In an example embodiment of this application, a chip is further provided. The chip includes a programmable logic circuit and/or a program instruction. When running on a communication device, the chip is configured to implement the configuration method provided in the foregoing method embodiments.

In some embodiments, the chip includes a receiving module 1510. Optionally, the chip further includes a processing module 1530 and/or a transmitting module 1550. For related content, reference may be made to the foregoing description, and details are not described herein again.

In some embodiments, the chip includes a transmitting module 1610. Optionally, the chip further includes a processing module 1630 and/or a receiving module 1650. For related content, reference may be made to the foregoing description, and details are not described herein again.

In an example embodiment of this application, a computer-readable storage medium is further provided. The computer-readable storage medium stores at least one segment of program, and the at least one segment of program is loaded and executed by a processor to implement the configuration method provided in the foregoing method embodiments.

In an example embodiment of this application, a computer program product is further provided. The computer program product includes computer instructions, the computer instructions are stored in a computer-readable storage medium, and a processor obtains the computer instructions from the computer-readable storage medium. The processor executes the computer instructions to implement the configuration method provided in the foregoing method embodiments.

In an example embodiment of this application, a computer program is further provided. The computer program includes computer instructions, the computer instructions are stored in a computer-readable storage medium, and a processor obtains the computer instructions from the computer-readable storage medium. The processor executes the computer instructions to implement the configuration method provided in the foregoing method embodiments.

A person of ordinary skill in the art may understand that all or some of the steps of the foregoing embodiments may be implemented by hardware or a program instructing related hardware. The program may be stored in a computer-readable storage medium. The storage medium may be a read-only memory, a magnetic disk, a compact disc, or the like.

The foregoing descriptions are merely optional embodiments of this application, but are not intended to limit this application. Any modification, equivalent replacement, improvement, or the like made within the spirit and principle of this application shall fall within the protection scope of this application.

## Claims

1. A configuration method, wherein the method is performed by a terminal device, and the method comprises:
receiving first information, wherein the first information is used to trigger at least one measurement resource configuration and/or at least one reporting configuration,
wherein the measurement resource configuration comprises at least one of the following: a measurement resource configuration of interference information, a measurement resource configuration of channel state information CSI, or a measurement resource configuration of joint information; the reporting configuration comprises at least one of the following: a reporting configuration of the interference information, a reporting configuration of the CSI, or a reporting configuration of the joint information; and the joint information is joint information of the interference information and the CSI.

2. The method according to claim 1, wherein the first information meets at least one of the following:
in a case that the first information indicates a first state, the first information is used to trigger at least one measurement resource configuration of the interference information and/or at least one reporting configuration of the interference information;
in a case that the first information indicates a second state, the first information is used to trigger at least one measurement resource configuration of the CSI and/or at least one reporting configuration of the CSI; or
in a case that the first information indicates a third state, the first information is used to trigger at least one measurement resource configuration of the joint information and/or at least one reporting configuration of the joint information.

3. The method according to claim 2, wherein before the receiving the first information, the method further comprises:
receiving second information and/or third information, wherein the second information is used to configure X measurement resource configurations, the at least one measurement resource configuration is one or more of the X measurement resource configurations, and X is an integer greater than or equal to 1; and the third information is used to configure Y reporting configurations, the at least one reporting configuration is one or more of the Y reporting configurations, and Y is an integer greater than or equal to 1.

4. The method according to claim 1, wherein the first information comprises the at least one measurement resource configuration and/or the at least one reporting configuration.

5. The method according to any one of claims 1 to 4, wherein the method further comprises:
transmitting a first request, wherein the first request is used to request a network device to transmit the first information.

6. The method according to claim 5, wherein the transmitting the first request comprises:
transmitting the first request in a case that a measurement result of the CSI meets a first condition.

7. The method according to claim 6, wherein a case in which the measurement result of the CSI meets the first condition comprises: a downlink signal measurement result is less than a first threshold, or the downlink signal measurement result is equal to the first threshold.

8. The method according to any one of claims 1 to 7, wherein the method further comprises:
transmitting a measurement report, wherein the measurement report comprises at least one of the following: a measurement report of the interference information, a measurement report of the CSI, or a measurement report of the joint information.

9. The method according to claim 8, wherein the measurement report is obtained through measurement based on the at least one measurement resource configuration, and is transmitted based on the at least one reporting configuration.

10. The method according to claim 8 or 9, wherein the transmitting the measurement report comprises:
transmitting the measurement report in a case that a measurement result meets a second condition;
wherein the measurement result comprises the measurement result of the CSI and/or a measurement result of the interference information.

11. The method according to claim 10, wherein a case in which the measurement result of the CSI meets the second condition comprises at least one of the following: the downlink signal measurement result is less than a second threshold; the downlink signal measurement result is equal to the second threshold; an uplink signal measurement result is greater than a third threshold; or the uplink signal measurement result is equal to the third threshold.

12. The method according to claim 10 or 11, wherein a case in which the measurement result of the interference information meets the second condition comprises at least one of the following: cross-link interference signal strength is greater than a fourth threshold; the cross-link interference signal strength is equal to the fourth threshold; an uplink signal measurement result is greater than a third threshold; or the uplink signal measurement result is equal to the third threshold.

13. The method according to any one of claims 8 to 12, wherein the measurement report of the interference information comprises the measurement result of the interference information, and the measurement result of the interference information comprises at least one of the following: a cross-link interference signal strength value, an uplink reference signal power value, or indication information, wherein the indication information is used to indicate whether the cross-link interference signal strength value is less than a fifth threshold, and/or whether the uplink reference signal power value is less than a sixth threshold.

14. The method according to claim 13, wherein the transmitting the measurement report comprises:
periodically transmitting first indication information, wherein the first indication information is used to indicate that the cross-link interference signal strength value is less than the fifth threshold, and/or the uplink reference signal power value is less than the sixth threshold; and
transmitting the cross-link interference signal strength value and/or the uplink reference signal power value in a case that a third condition is met.

15. The method according to claim 14, wherein before the transmitting the cross-link interference signal strength value and/or the uplink reference signal power value in a case that the third condition is met, the method further comprises:
transmitting second indication information, wherein the second indication information is used to indicate at least one of the following: the cross-link interference signal strength value is greater than the fifth threshold, the cross-link interference signal strength value is equal to the fifth threshold, the uplink reference signal power value is greater than the sixth threshold, or the uplink reference signal power value is equal to the sixth threshold.

16. The method according to claim 14 or 15, wherein a case in which the third condition is met comprises at least one of the following:
the cross-link interference signal strength value is greater than the fifth threshold, the cross-link interference signal strength value is equal to the fifth threshold, the uplink reference signal power value is greater than the sixth threshold, or the uplink reference signal power value is equal to the sixth threshold.

17. The method according to claim 15, wherein the second indication information is further used to indicate that the terminal device is to transmit the cross-link interference signal strength value and/or the uplink reference signal power value in a next uplink transmission.

18. The method according to claim 15, wherein the second indication information is further used to request the network device to schedule the terminal device to transmit the cross-link interference signal strength value and/or the uplink reference signal power value in a next uplink transmission.

19. The method according to any one of claims 8 to 18, wherein the measurement report of the interference information is obtained through measurement in a downlink frequency band used by the terminal device, or is obtained through measurement in a subband not used by the terminal device.

20. The method according to any one of claims 8 to 18, wherein the measurement report of the interference information is obtained through measurement in a downlink frequency band used by the terminal device, and there is no downlink transmission in at least a part of frequency domain resources in the downlink frequency band.

21. The method according to any one of claims 8 to 20, wherein the measurement report of the CSI comprises the measurement result of the CSI, and the measurement result of the CSI comprises at least one of the following: a downlink signal measurement result or an uplink signal measurement result.

22. The method according to any one of claims 8 to 21, wherein the measurement report of the joint information comprises a measurement result of the joint information, and the measurement result of the joint information is obtained based on the reporting configuration of the joint information, or obtained based on the reporting configuration of the interference information and the reporting configuration of the CSI.

23. The method according to claim 22, wherein the measurement result of the joint information comprises a first signal to interference plus noise ratio, SINR, and the first SINR is obtained based on the measurement resource configuration of the interference information and the measurement resource configuration of the CSI; or the measurement result of the joint information comprises a concatenation result of the measurement result of the CSI and the measurement result of the interference information.

24. The method according to any one of claims 1 to 23, wherein the method further comprises:
obtaining the measurement result of the interference information in a case that the measurement result of the CSI meets a fourth condition.

25. The method according to claim 24, wherein a case in which the measurement result of the CSI meets the fourth condition comprises at least one of the following: the downlink signal measurement result is less than a seventh threshold; the downlink signal measurement result is equal to the seventh threshold; the uplink signal measurement result is greater than an eighth threshold; or the uplink signal measurement result is equal to the eighth threshold.

26. The method according to claim 7, 11, 21, or 25, wherein the downlink signal measurement result comprises at least one of the following: a signal strength indicator value of a downlink signal, a channel quality indicator value of the downlink signal, or a second SINR of the downlink signal,
wherein the second SINR is obtained based on the measurement resource configuration of the CSI.

27. The method according to claim 11, 12, 21, or 25, wherein the uplink signal measurement result comprises: SRS signal received power.

28. The method according to any one of claims 1 to 27, wherein the measurement resource configuration of the interference information comprises at least one interference information measurement resource set, and each set of the at least one interference information measurement resource set comprises: at least one first measurement resource and/or at least one second measurement resource, wherein the first measurement resource is used to obtain cross-link interference signal strength indication information and/or a cross-link interference signal strength value, and the second measurement resource is used to obtain uplink reference signal power indication information and/or an uplink reference signal power value.

29. The method according to any one of claims 1 to 28, wherein the measurement resource configuration of the CSI comprises at least one CSI measurement resource set and/or at least one SRS measurement resource set; and each CSI measurement resource set of the at least one CSI measurement resource set comprises at least one CSI-RS measurement resource and/or at least one CSI-IM measurement resource, and each SRS measurement resource set of the at least one SRS measurement resource set comprises at least one SRS measurement resource.

30. The method according to any one of claims 1 to 29, wherein the measurement resource configuration of the joint information comprises at least one joint information measurement resource set, and each joint information measurement resource set of the at least one joint information measurement resource set comprises at least one of the following: at least one first measurement resource, at least one second measurement resource, at least one CSI-RS measurement resource, at least one CSI-IM measurement resource, or at least one SRS measurement resource, wherein the first measurement resource is used to obtain cross-link interference signal strength indication information and/or a cross-link interference signal strength value, and the second measurement resource is used to obtain uplink reference signal power indication information and/or an uplink reference signal power value.

31. The method according to any one of claims 1 to 30, wherein the measurement resource configuration is used to configure a periodic time domain resource, a semi-persistent time domain resource, or an aperiodic time domain resource.

32. The method according to any one of claims 1 to 31, wherein the measurement resource configuration configures a frequency domain resource at a granularity of a wideband, or configures a frequency domain resource at a granularity of a subband.

33. The method according to any one of claims 1 to 32, wherein the measurement resource configuration is used to configure one or more subbands, and different subbands comprise same or different quantities of resource blocks RBs.

34. The method according to any one of claims 1 to 33, wherein the reporting configuration is used to indicate periodic reporting, semi-persistent reporting, aperiodic reporting, or trigger-based reporting.

35. The method according to any one of claims 1 to 34, wherein the reporting configuration is used to indicate reporting at a granularity of a wideband, or reporting at a granularity of a subband.

36. The method according to claim 35, wherein in a case that the measurement resource configuration configures a frequency domain resource at a granularity of a wideband, the reporting configuration is used to indicate reporting at a granularity of a wideband or a subband; or in a case that the measurement resource configuration configures a frequency domain resource at a granularity of a subband, the reporting configuration is used to indicate reporting at a granularity of a subband.

37. The method according to any one of claims 1 to 36, wherein the reporting configuration of the interference information is associated with the one or more measurement resource configurations of the interference information, the CSI reporting configuration is associated with the one or more measurement resource configurations of the CSI, and the reporting configuration of the joint information is associated with the one or more measurement resource configurations of the joint information.

38. A configuration method, wherein the method is performed by a network device, and the method comprises:
transmitting first information, wherein the first information is used to trigger at least one measurement resource configuration and/or at least one reporting configuration,
wherein the measurement resource configuration comprises at least one of the following: a measurement resource configuration of interference information, a measurement resource configuration of channel state information CSI, or a measurement resource configuration of joint information; the reporting configuration comprises at least one of the following: a reporting configuration of the interference information, a reporting configuration of the CSI, or a reporting configuration of the joint information; and the joint information is joint information of the interference information and the CSI.

39. The method according to claim 38, wherein the first information meets at least one of the following:
in a case that the first information indicates a first state, the first information is used to trigger at least one measurement resource configuration of the interference information and/or at least one reporting configuration of the interference information;
in a case that the first information indicates a second state, the first information is used to trigger at least one measurement resource configuration of the CSI and/or at least one reporting configuration of the CSI; or
in a case that the first information indicates a third state, the first information is used to trigger at least one measurement resource configuration of the joint information and/or at least one reporting configuration of the joint information.

40. The method according to claim 39, wherein the method further comprises:
transmitting second information and/or third information,
wherein the second information is used to configure X measurement resource configurations, the at least one measurement resource configuration is one or more of the X measurement resource configurations, and X is an integer greater than or equal to 1; and the third information is used to configure Y reporting configurations, the at least one reporting configuration is one or more of the Y reporting configurations, and Y is an integer greater than or equal to 1.

41. The method according to claim 38, wherein the first information comprises the at least one measurement resource configuration and/or the at least one reporting configuration.

42. The method according to any one of claims 38 to 41, wherein the method further comprises:
receiving a first request, wherein the first request is used to request the network device to transmit the first information.

43. The method according to claim 42, wherein the first request is transmitted in a case that a measurement result of the CSI meets a first condition.

44. The method according to claim 43, wherein a case in which the measurement result of the CSI meets the first condition comprises: a downlink signal measurement result is less than a first threshold, or the downlink signal measurement result is equal to the first threshold.

45. The method according to any one of claims 38 to 44, wherein the method further comprises:
receiving a measurement report, wherein the measurement report comprises at least one of the following: a measurement report of the interference information, a measurement report of the CSI, or a measurement report of the joint information.

46. The method according to claim 45, wherein the measurement report is obtained through measurement based on the at least one measurement resource configuration, and is transmitted based on the at least one reporting configuration.

47. The method according to claim 45 or 46, wherein the measurement report is transmitted in a case that a measurement result meets a second condition, wherein the measurement result comprises the measurement result of the CSI and/or a measurement result of the interference information.

48. The method according to claim 47, wherein a case in which the measurement result of the CSI meets the second condition comprises at least one of the following: the downlink signal measurement result is less than a second threshold; the downlink signal measurement result is equal to the second threshold; an uplink signal measurement result is greater than a third threshold; or the uplink signal measurement result is equal to the third threshold.

49. The method according to claim 47 or 48, wherein a case in which the measurement result of the interference information meets the second condition comprises at least one of the following: cross-link interference signal strength is greater than a fourth threshold; the cross-link interference signal strength is equal to the fourth threshold; an uplink signal measurement result is greater than a third threshold; or the uplink signal measurement result is equal to the third threshold.

50. The method according to any one of claims 45 to 49, wherein the measurement report of the interference information comprises the measurement result of the interference information, and the measurement result of the interference information comprises at least one of the following: a cross-link interference signal strength value, an uplink reference signal power value, or indication information, wherein the indication information is used to indicate whether the cross-link interference signal strength value is less than a fifth threshold, and/or whether the uplink reference signal power value is less than a sixth threshold.

51. The method according to claim 50, wherein the receiving the measurement report comprises:
periodically receiving first indication information, wherein the first indication information is used to indicate that the cross-link interference signal strength value is less than the fifth threshold, and/or the uplink reference signal power value is less than the sixth threshold; and
receiving the cross-link interference signal strength value and/or the uplink reference signal power value, wherein the cross-link interference signal strength value and/or the uplink reference signal power value are/is transmitted in a case that a third condition is met.

52. The method according to claim 51, wherein the method further comprises:
receiving second indication information, wherein the second indication information is used to indicate at least one of the following: the cross-link interference signal strength value is greater than the fifth threshold, the cross-link interference signal strength value is equal to the fifth threshold, the uplink reference signal power value is greater than the sixth threshold, or the uplink reference signal power value is equal to the sixth threshold.

53. The method according to claim 51 or 52, wherein a case in which the third condition is met comprises at least one of the following:
the cross-link interference signal strength value is greater than the fifth threshold, the cross-link interference signal strength value is equal to the fifth threshold, the uplink reference signal power value is greater than the sixth threshold, or the uplink reference signal power value is equal to the sixth threshold.

54. The method according to claim 52, wherein the second indication information is further used to indicate that a terminal device is to transmit the cross-link interference signal strength value and/or the uplink reference signal power value in a next uplink transmission.

55. The method according to claim 52, wherein the second indication information is further used to request the network device to schedule a terminal device to transmit the cross-link interference signal strength value and/or the uplink reference signal power value in a next uplink transmission.

56. The method according to any one of claims 45 to 55, wherein the measurement report of the interference information is obtained through measurement in a downlink frequency band used by the terminal device, or is obtained through measurement in a subband not used by the terminal device.

57. The method according to any one of claims 45 to 55, wherein the measurement report of the interference information is obtained through measurement in a downlink frequency band used by the terminal device, and there is no downlink transmission in at least a part of frequency domain resources in the downlink frequency band.

58. The method according to any one of claims 45 to 57, wherein the measurement report of the CSI comprises the measurement result of the CSI, and the measurement result of the CSI comprises at least one of the following: a downlink signal measurement result or an uplink signal measurement result.

59. The method according to any one of claims 45 to 58, wherein the measurement report of the joint information comprises a measurement result of the joint information, and the measurement result of the joint information is obtained based on the reporting configuration of the joint information, or obtained based on the reporting configuration of the interference information and the reporting configuration of the CSI.

60. The method according to claim 59, wherein the measurement result of the joint information comprises a first SINR, and the first SINR is obtained based on the measurement resource configuration of the interference information and the measurement resource configuration of the CSI; or the measurement result of the joint information comprises a concatenation result of the measurement result of the CSI and the measurement result of the interference information.

61. The method according to any one of claims 38 to 60, wherein the measurement result of the interference information is obtained in a case that the measurement result of the CSI meets a fourth condition.

62. The method according to claim 61, wherein a case in which the measurement result of the CSI meets the fourth condition comprises at least one of the following: the downlink signal measurement result is less than a seventh threshold; the downlink signal measurement result is equal to the seventh threshold; the uplink signal measurement result is greater than an eighth threshold; or the uplink signal measurement result is equal to the eighth threshold.

63. The method according to claim 44, 48, 58, or 62, wherein the downlink signal measurement result comprises at least one of the following: a signal strength indicator value of a downlink signal, a channel quality indicator value of the downlink signal, or a second SINR of the downlink signal, wherein the second SINR is obtained based on the measurement resource configuration of the CSI.

64. The method according to claim 48, 49, 58, or 62, wherein the uplink signal measurement result comprises: SRS signal received power.

65. The method according to any one of claims 38 to 64, wherein the measurement resource configuration of the interference information comprises at least one interference information measurement resource set, and each set of the at least one interference information measurement resource set comprises: at least one first measurement resource and/or at least one second measurement resource, wherein the first measurement resource is used to obtain cross-link interference signal strength indication information and/or a cross-link interference signal strength value, and the second measurement resource is used to obtain uplink reference signal power indication information and/or an uplink reference signal power value.

66. The method according to any one of claims 38 to 65, wherein the measurement resource configuration of the CSI comprises at least one CSI measurement resource set and/or at least one SRS measurement resource set; and each CSI measurement resource set of the at least one CSI measurement resource set comprises at least one CSI-RS measurement resource and/or at least one CSI-IM measurement resource, and each SRS measurement resource set of the at least one SRS measurement resource set comprises at least one SRS measurement resource.

67. The method according to any one of claims 38 to 66, wherein the measurement resource configuration of the joint information comprises at least one joint information measurement resource set, and each joint information measurement resource set of the at least one joint information measurement resource set comprises at least one of the following: at least one first measurement resource, at least one second measurement resource, at least one CSI-RS measurement resource, at least one CSI-IM measurement resource, or at least one SRS measurement resource, wherein the first measurement resource is used to obtain cross-link interference signal strength indication information and/or a cross-link interference signal strength value, and the second measurement resource is used to obtain uplink reference signal power indication information and/or an uplink reference signal power value.

68. The method according to any one of claims 38 to 67, wherein the measurement resource configuration is used to configure a periodic time domain resource, a semi-persistent time domain resource, or an aperiodic time domain resource.

69. The method according to any one of claims 38 to 68, wherein the measurement resource configuration configures a frequency domain resource at a granularity of a wideband, or configures a frequency domain resource at a granularity of a subband.

70. The method according to any one of claims 38 to 69, wherein the measurement resource configuration is used to configure one or more subbands, and different subbands comprise same or different quantities of resource blocks RBs.

71. The method according to any one of claims 38 to 70, wherein the reporting configuration is used to indicate periodic reporting, semi-persistent reporting, aperiodic reporting, or trigger-based reporting.

72. The method according to any one of claims 38 to 71, wherein the reporting configuration is used to indicate reporting at a granularity of a wideband, or reporting at a granularity of a subband.

73. The method according to claim 72, wherein in a case that the measurement resource configuration configures a frequency domain resource at a granularity of a wideband, the reporting configuration is used to indicate reporting at a granularity of a wideband or a subband; or in a case that the measurement resource configuration configures a frequency domain resource at a granularity of a subband, the reporting configuration is used to indicate reporting at a granularity of a subband.

74. The method according to any one of claims 38 to 73, wherein the reporting configuration of the interference information is associated with the one or more measurement resource configurations of the interference information, the CSI reporting configuration is associated with the one or more measurement resource configurations of the CSI, and the reporting configuration of the joint information is associated with the one or more measurement resource configurations of the joint information.

75. A configuration apparatus, wherein the apparatus comprises:
a receiving module, configured to receive first information, wherein the first information is used to trigger at least one measurement resource configuration and/or at least one reporting configuration, wherein the measurement resource configuration comprises at least one of the following: a measurement resource configuration of interference information, a measurement resource configuration of channel state information CSI, or a measurement resource configuration of joint information; the reporting configuration comprises at least one of the following: a reporting configuration of the interference information, a reporting configuration of the CSI, or a reporting configuration of the joint information; and the joint information is joint information of the interference information and the CSI.

76. A configuration apparatus, wherein the apparatus comprises:
a transmitting module, configured to transmit first information, wherein the first information is used to trigger at least one measurement resource configuration and/or at least one reporting configuration, wherein the measurement resource configuration comprises at least one of the following: a measurement resource configuration of interference information, a measurement resource configuration of channel state information CSI, or a measurement resource configuration of joint information; the reporting configuration comprises at least one of the following: a reporting configuration of the interference information, a reporting configuration of the CSI, or a reporting configuration of the joint information; and the joint information is joint information of the interference information and the CSI.

77. A terminal device, wherein the terminal device comprises: a processor; a transceiver connected to the processor; and a memory configured to store executable instructions of the processor, wherein the processor is configured to load and execute the executable instructions to implement the configuration method according to any one of claims 1 to 37.

78. A network device, wherein the network device comprises: a processor; a transceiver connected to the processor; and a memory configured to store executable instructions of the processor, wherein the processor is configured to load and execute the executable instructions to implement the configuration method according to any one of claims 38 to 74.

79. A computer-readable storage medium, wherein the computer-readable storage medium stores at least one segment of program, and the at least one segment of program is loaded and executed by a processor to implement the configuration method according to any one of claims 1 to 37 or the configuration method according to any one of claims 38 to 74.

80. A computer program product or a computer program, wherein the computer program product or the computer program comprises computer instructions, the computer instructions are stored in a computer-readable storage medium, and a processor obtains the computer instructions from the computer-readable storage medium, and the processor executes the computer instructions to implement the configuration method according to any one of claims 1 to 37 or the configuration method according to any one of claims 38 to 74.

81. A chip, wherein the chip comprises a programmable logic circuit and/or at least one segment of program, and the chip is configured to implement the configuration method according to any one of claims 1 to 37 or the configuration method according to any one of claims 38 to 74 based on the programmable logic circuit and/or the at least one segment of program.
